# EUROPEAN PATENT SPECIFICATION

(11) **EP 4 658 700 B1**
(45) Date of publication and mention of the grant of the patent: **18.11.2026**
(21) Application number: 25708492.1
(22) Date of filing: 14.02.2025
(51) Int. Cl.: C08G 59/40, C08G 59/66, C08G 59/68, C08L 63/00, C09J 163/00

(54) **ADHESIVE FORMULATION**
KLEBSTOFFFORMULIERUNG
FORMULATION ADHÉSIVE

(30) Priority: 19.02.2024 US 202463555186 P; 30.04.2024 GB 202406047
(43) Date of publication of application: 10.12.2025
(73) Proprietor: Chemence, Inc, Alpharetta, GA 30005 (US)
(72) Inventor: RUSLI, Harry Edison, Alpharetta, GA 30005 (US); SEO, Kwang Su, Alpharetto, GA 30005 (US)
(74) Representative: HGF
(86) International application number: PCT/GB2025/050301
(87) International publication number: WO 2025/176980

(56) References cited:
- JP-A- 2021 152 108
- JP-B2- 6 449 553
- CHEN LI ET AL: "Delayed Thiol-Epoxy Photopolymerization: A General and Effective Strategy to Prepare Thick Composites", ACS OMEGA, vol. 5, no. 25, 18 June 2020 (2020-06-18), US, pages 15192 - 15201, XP093258824, ISSN: 2470-1343, Retrieved from the Internet <URL:http://pubs.acs.org/doi/pdf/10.1021/acsomega.0c01170> DOI: 10.1021/acsomega.0c01170

## Description

### TECHNICAL FIELD OF INVENTION

The present invention relates to adhesive formulations. The adhesive formulations of the present invention may be useful in the field of electronics adhesives. In particular, the present invention relates to adhesive formulations that can be cured at less than 62°C, e.g. 55°C for 60 minutes or 60°C for 30 minutes. In particular, the present invention relates to adhesive formulations that are stable at room temperature for more than 72 hours.

### BACKGROUND

In the electronics industry, epoxy adhesive is used due to its strength and stability. Most epoxy adhesives are made in two-parts which need to be mixed in a certain ratio to obtain the best result. One-part epoxy adhesives are advantageous in that they do not require mixing prior to use as the formulation has already been made at the point of manufacture. However, one-part epoxy adhesives can suffer stability issues. In order for a one-part epoxy adhesive to be a viable adhesive, it must be stable at room temperature. To ensure room temperature stability, most one-part epoxy adhesives are cured at temperatures of 80°C or higher.

It would be advantageous to identify adhesive formulations that cure at lower temperatures, but are stable during storage, as this would reduce the risk of damage to electronics components, delamination of films, deformation of modules, and reduce manufacturing costs.

Known attempts to reduce the cure temperature include the addition of a latent hardener component (a component that is able to initiate the curing process at elevated temperatures). The difficulty is that the inclusion of a latent hardener component can have the undesired effect of reducing storage stability. For that reason, in addition to the latent hardener component, a stabiliser component is sometimes added.

One such example of a formulation including a latent hardener and a stabiliser is US2013313693. US2013313693 discloses a curable one-part curable epoxy-thiol compositions. The authors of this document report an improved shelf-life stability. The resin compositions described in this document include: (a) an epoxy component comprising at least one epoxy compound which has two or more groups per molecule; (b) a latent hardener component; (c) a thixotropy-conferring component; (d) a polythiol component comprising a polythiol having at least one secondary or tertiary thiol group per molecule; and (e) a stabilising component comprising a solid organic acid. The solid organic acid component used in US2013313693 as a stabilising component are described as including phenols, quinones, carboxylic acids and enolisable materials. Whilst reduced from other known epoxy systems, the onset temperature of the specific compositions tested in US2013313693 is still at least 62°C. Adhesives having an onset temperature of <62°C would be advantageous in order to avoid unnecessary damage to electrical components during curing. Adhesives having an onset temperature of <62°C would be advantageous in reducing the environmental impact and improving the cost-effectiveness of the manufacturing process for electrical equipment.

WO2016/130455 discloses an epoxy adhesive composition that is used as a crash durable adhesive, i.e. an adhesive capable of withstanding high impact resistance and high bond strength. The crash durable adhesives of WO2016/130455 can be cured at temperatures of about 130°C - lower than other known crash durable adhesives, which are known to cure at above 155°C. The adhesive compositions described in this document include more than 3wt% of a blocked tertiary amine catalyst (a catalyst formed from 2,4,6-tris(dimethylaminomethyl)phenol and a particular phenol-formaldehyde resin) and a particular combination of tougheners. Such epoxy adhesive compositions that cure at 130-155°C are unsuitable for use in electrical component manufacture as the curing temperatures required would damage the electrical components.

Guzmán, D., Ramis, X., Fernández-Francos, X., & Serra, A. (2014); New catalysts for diglycidyl ether of bisphenol A curing based on thiol-epoxy click reaction; European Polymer Journal; Volume 59; pages 377-386 describe the thiol-epoxy click reaction in the curing of mixtures of diglycidyl ether of bisphenol A (DGEBA)/thiol using latent amine precursors in ratios of 0.5 and 2 phr. The use of latent amine precursors in these systems (as opposed to non-latent amine precursors) was reported to extend the pot-life of the formulations. The authors used a *primary* thiol compound, namely trimethylolpropane tris(3-mercaptopropionate): 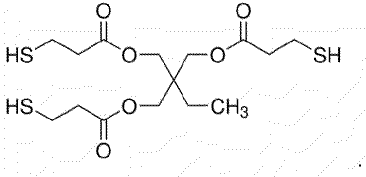 The authors identified that a higher proportion of the amine precursor - 2 phr as opposed to 0.5 phr - reduces the curing temperature and increases the curing rate. However, the authors only used a maximum of 2 phr latent amine precursor. For Technicure LC-80 the mixture was reported to begin to cure at 110°C and for PDU-250 the curing occurred at 140°C.

Guzmán, D., Ramis, X., Fernández-Francos, X., & Serra, A. (2015); Preparation of click thiol-ene/thiol-epoxy thermosets by controlled photo/thermal dual curing sequence; RSC Advances, 5(123), 101623-101633 describe a sequential, two step, photo and thermal process for the preparation of thiol-ene/thiol-epoxy thermosets. The authors used a *primary* thiol compound, namely pentaerythritol tetra (3-mercaptopropionate) (PETMP):

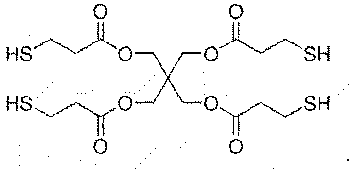

A photoinitiator is used to start the thiol/ene reaction and a latent amine precursor is used to start the base-catalyzed thiol-epoxy reaction. Particular latent amine precursors used are encapsulated imidazoles, such as Technicure LC-80, and urea compounds, such as PDU-250. The authors describe that Technicure LC-80 / PDU-250 was added to the thiol/ene and thiol/epoxy mixture along with the photoinitiator. Technicure LC-80 is added in a small amount of 1 part per hundred (phr) of total mixture and was intended to avoid thermal initiation of the thiol-epoxy reaction until after the photoinitiated thiol-ene reaction had completed. Therefore, the authors deliberately sought to produce a material that was not thermally activated at lower temperatures, and would instead only begin to cure following thermal activation at higher temperatures. Despite the inclusion of only 1 phr Technicure LC-80, it was found that the initial photocuring step generated sufficient heat (around 78°C of heat) to initiate the thermal thiol/epoxy reaction when Technicure LC-80 is used and, for that reason, PDU-250 was used in place of Technicure LC-80.

JP2021152108A discloses a resin composition that contains (A) an epoxy resin, (B) a thiol compound, and (C) a magnetic powder. The amount of thiol compound present in the formulations of JP2021152108A is much lower than the amount present in the claims of this invention. The binding strength properties of the formulations described in JP2021152108A have been tested by the applicant and found to be inferior.

CN117736678 discloses an epoxy resin composition prepared from the following components in parts by weight: 20-40 parts of epoxy resin, 5-10 parts of a toughening agent, 20-30 parts of a curing agent, 5-10 parts of an accelerant, 0.1-1 part of a stabilizer, 10-15 parts of filler, 2-10 parts of pigment, 1-5 parts of a thixotropic agent and 0.1-1 part of an auxiliary agent. The authors only cure the composition at 80°C. There is no disclosure that the compositions cure at <62°C. Indeed, the applicant has repeated the teaching of CN117736678 and has confirmed that the formulations disclosed do not cure at around 60°C. JP 6449553 B2 relates to an epoxy resin composition that is compatible with storage stability and rapid curability. According to paragraph [0012], by using a polythiol having a specific acid value and a reaction inhibitor, an epoxy resin composition containing a polythiol compound which makes both quick curability and storage stability compatible is made possible.

None of the prior art that is known to the applicant provides for an epoxy-based adhesive formulation that is (i) stable for at least 72 hours; (ii) can be cured at low temperatures of <62°C; and (iii) has high overlap shear strength when cured. The present invention addresses this need.

### SUMMARY OF INVENTION:

According to a first aspect there is provided an adhesive formulation comprising:
(A) an epoxy resin component having two or more epoxide groups per molecule;
(B) an epoxy rubber component having two or more epoxide groups per molecule;
(C) from 36 to about 45 wt% of a thiol component having two or more independently selected secondary or tertiary thiol groups per molecule;
(D) 0.15 wt% to 0.45 wt% of a borate component; and
(E) more than 0.05 wt% to less than 10 wt% of a latent catalyst component,
   wherein the latent catalyst component is activated at a temperature of <120°C;
such that the following equation is satisfied: wt% of (E) / [wt% of (A) + wt% of (B)] x 100 > 4.

In an embodiment, the epoxy resin component is any polymeric epoxide which has an average of two or more epoxide groups per molecule.

In an embodiment, the epoxy resin component is a polyglycidyl ether of polyhydric phenols, for example, polyglycidyl ethers of bisphenol A, bisphenol F, bisphenol AD, catechol and resorcinol. In an embodiment, the epoxy resin component is a BPF epoxy resin, preferably diglycidyl ether bisphenol F (DGEBF): 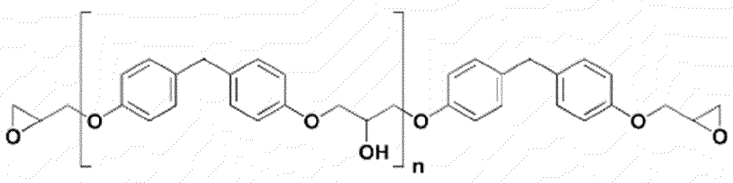 or diglycidyl ether bisphenol A (DGEBA): 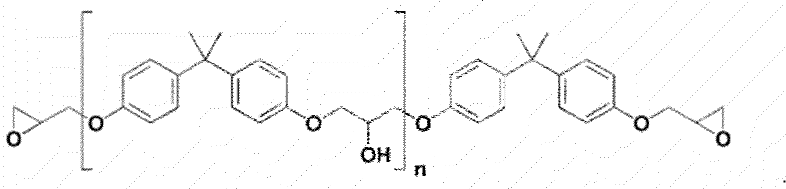 Most preferably, the epoxy resin component is diglycidyl ether bisphenol F (DGEBF): 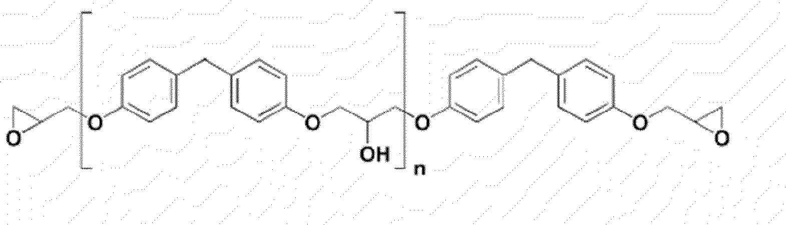 DGEBF is available as Epon Resin 862 from Hexion (Westlake).

In an embodiment, the epoxy resin component is obtained by reacting polyhydric alcohols such as butinediol or polyethylene glycol or glycerin with epichlorohydrin. In an embodiment, the epoxy resin component is an epoxidised (poly)olefinic resin, an epoxidised phenolic novolac resins, an epoxidised cresol novolac resins or a cycloaliphatic epoxy resins.

In an embodiment, the epoxy resin component is a glycidyl ether ester, such as those obtained by reacting hydroxycarboxylic acid with epichlorohydrin, and polyglycidyl esters, such as those obtained by reacting a polycarboxylic acid with epichlorohydrin.

In an embodiment, the epoxy resin component is a urethane modified epoxy resin.

In an embodiment, the epoxy resin component is a polyepoxy compounds based on aromatic amines and epichlorohydrin, such as N,N'-diglycidyl-aniline; N,N'-dimethyl-N,N'-diglycidyl-4,4' diaminodiphenyl methane; N,N,N',N'-tetraglycidyl-4,4' diaminodiphenyl methane; N-diglycidyl-4-aminophenyl glycidyl ether; and N,N,N',N'-tetraglycidyl-1,3-propylene bis-4-aminobenzoate.

In an embodiment, the epoxy resin component is a polyglycidyl derivative of phenolic compounds, such as those available commercially under the trade names EPON 828 (a BPA epoxy resin), EPON 1001 (a BPA epoxy resin), EPON 1009 (a BPA epoxy resin), and EPON 1031 (having the structure 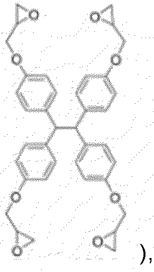 from Shell Chemical Co.; DER 331 (a BPA epoxy resin), DER 332 (a BPA epoxy resin), and DER 542 (a brominated BPA epoxy resin) from Dow Chemical Co.: and BREN-S (a brominated Novolac epoxy resin) from Nippon Kayaku, Japan. In an embodiment, the epoxy resin component is a polyepoxide prepared from polyols and the like and polyglycidyl derivatives of phenol-formaldehyde novolacs, the latter of which are available commercially under the trade names DEN 431, DEN 438, and DEN 439 (each a Novolac epoxy resin) from Dow Chemical Company. In an embodiment, the epoxy resin component is a cresol analogue available commercially under the trade name ECN 1235, ECN 1273, and ECN 1299 (each a Cresol Novolac epoxy resin) from Huntsman. In an embodiment, the epoxy resin component is a bisphenol A-type epoxy novolac available commercially as Epon SU-8 (having the structure 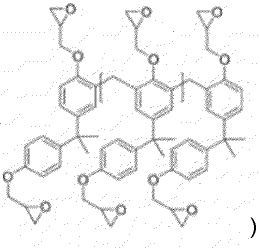 from Westlake Epoxy. In an embodiment, the epoxy resin component is a polyglycidyl adduct of amines, aminoalcohols and polycarboxylic acids and are commercially available as ARALDITE MY-720, ARALDITE 0500, and ARALDITE 0510 from Huntsman.

In an embodiment, the epoxy resin component is present in the adhesive formulation in an amount of from about 15 to about 35 wt%. In a preferred embodiment, the epoxy resin component is present in the adhesive formulation in an amount of from about 20 to about 35 wt%. In a more preferred embodiment, the epoxy resin component is present in the adhesive formulation in an amount of from about 25 to about 30 wt%, for example: 25, 26, 27, 28, 29 or 30 wt%.

In an embodiment, the epoxy rubber component is an adduct of an epoxide component and a rubber component, which has an average of two or more epoxide groups per molecule.

In an embodiment, the epoxy rubber component is an adduct of an epoxy resin that is modified with a rubber component. In an embodiment, the epoxy rubber component is an epoxy-terminated adduct of an epoxy resin and at least one rubber component that has epoxide-reactive groups, in particular, carboxyl groups. The rubber component is preferably a homopolymer of a conjugated diene or copolymer of a conjugated diene, especially a diene/nitrile copolymer. The conjugated diene rubber component is preferably butadiene or isoprene, with butadiene being especially preferred. The preferred nitrile monomer is acrylonitrile. Preferred copolymers are butadiene-acrylonitrile copolymers. The rubber component preferably contains, in the aggregate, no more than 30 wt% of polymerized unsaturated nitrile monomer, and preferably no more than about 26 wt% of polymerized nitrile monomer. The rubber component preferably contains from about 1.5, more preferably from about 1.8, to about 2.5, more preferably to about 2.2, epoxide-reactive terminal groups per molecule, on average. Carboxyl-terminated rubber components are preferred, e.g. Hypro 1300x13 carboxyl terminated butadiene-acrylonitrile copolymer.

Suitable carboxyl-functional butadiene and butadiene/acrylonitrile rubber components are commercially available from Hunstman as Hypro^{®} 2000x162 carboxyl-terminated butadiene homopolymer and Hypro^{®} 1300x31, Hypro^{®} 1300x8, Hypro^{®} 1300x13, Hypro^{®} 1300x9 and Hypro^{®} 1300x18 carboxyl-terminated butadiene/acrylonitrile copolymers. The molecular weight (Mw) of these rubber components are suitably from about 2000 to about 6000, more preferably from about 3000 to about 5000. The rubber component is formed into an epoxy-terminated adduct by reaction with an excess of an epoxy resin. Enough of the epoxy resin is provided to react with all of the epoxide-reactive groups on the rubber component and to provide free epoxide groups on the resulting adduct without significantly advancing the adduct to form high molecular weight species. A ratio of at least about 1.5 to about 2 equivalents of epoxy resin per equivalent of epoxy-reactive groups on the rubber may be preferred. More preferably, enough of the epoxy resin compound is used that the resulting product is a mixture of the carboxy terminated butadiene-acrylonitrile ("CTBN")-adduct and some free epoxy resin compound. Typically, the rubber component and an excess of the epoxy resin are mixed together with a polymerization catalyst and heated to a temperature of about 100 to about 250° C in order to form the adduct. Preferred catalysts for forming the rubber-modified epoxy resin include phenyl dimethyl urea and triphenyl phosphine.

A wide variety of epoxide components can be used to make the epoxy rubber component. Preferred epoxide components are liquid or solid glycidyl ethers of a bisphenol such as bisphenol A or bisphenol F. Halogenated, particularly brominated, resins can be used to impart flame retardant properties if desired. Liquid epoxy resin such as DER^{™} 354 resin, which is a diglycidyl ether of bisphenol F available from The Dow Chemical Company, is especially preferred.

Epoxy-CTBN adducts are sold in admixture with an epoxy resin under the trade name HyPox^{™} RK84 and the trade name HyPox RA1340, both commercially available from Huntsman. Preferred examples of such epoxy-CTBN adduct toughener are commercially available from Huntsman under the trade name HyPox RF1320.

In an embodiment, the epoxy rubber component is a CTBN Epoxy Adduct (BPA Type): 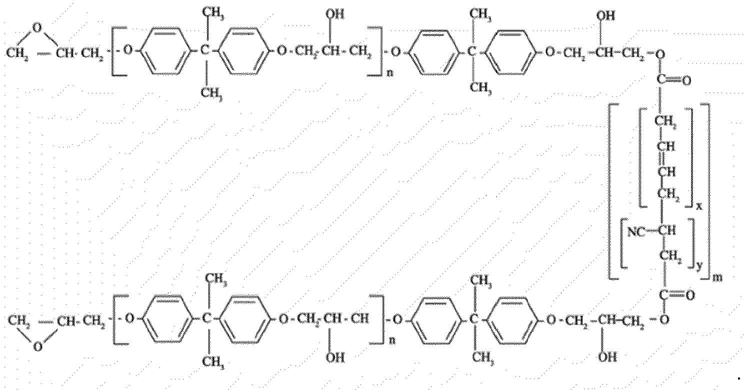 This is available as Hypox RA 1340 from Huntsman.

In an embodiment, the epoxy rubber component is a CTBN Epoxy Adduct (BPF Type): 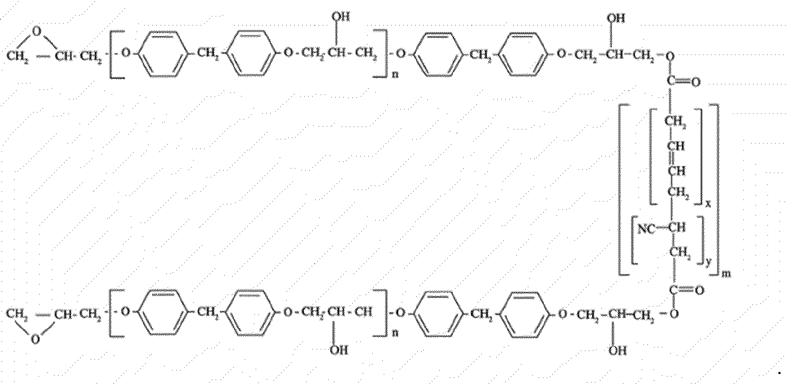 This is available as Hypox RF 1341N from Huntsman.

In an embodiment, the epoxy rubber component is present in the adhesive formulation in an amount of from about 7 to about 26 wt%. In a preferred embodiment, the epoxy rubber component is present in the adhesive formulation in an amount of from about 10 to about 26 wt%. In a more preferred embodiment, the epoxy rubber component is present in the adhesive formulation in an amount of from about 12 to about 24 wt%. In a more preferred embodiment, the epoxy rubber component is present in the adhesive formulation in an amount of from about 14 to about 20 wt%, for example: 14, 15, 16, 17, 18, 19 or 20 wt%.

In an embodiment, the thiol component having two or more independently selected secondary or tertiary thiol groups per molecule has an average of two or more secondary or tertiary thiol groups per molecule. In an embodiment, the thiol component having two or more independently selected secondary or tertiary thiol groups per molecule has an average of two or more secondary thiol groups per molecule.

In an embodiment, the thiol component has an average of two secondary or tertiary thiol groups per molecule. In an embodiment, the thiol component has an average of three secondary or tertiary thiol groups per molecule. In an embodiment, the thiol component has an average of four secondary or tertiary thiol groups per molecule. In an embodiment, the thiol component has an average of five secondary or tertiary thiol groups per molecule. In an embodiment, the thiol component has an average of six secondary or tertiary thiol groups per molecule.

In an embodiment, the thiol component is selected from the group consisting of:
1,4-bis (3-mercaptobutyroxy)butane (Karenz MT) 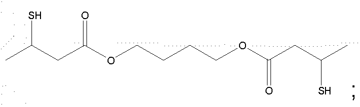
1-4-bis (3-mercaptobutyloxy)butane 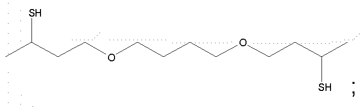
trimethylol propane tris (3-mercaptobutylate) 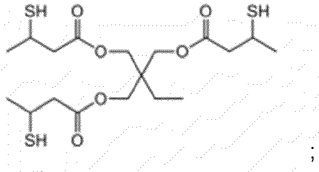
1,3,5-Tris [2-(3-mercaptobutanoyloxy)ethyl]-1,3,5-triazine-2,4,6-(1H,3H,5H)-trione 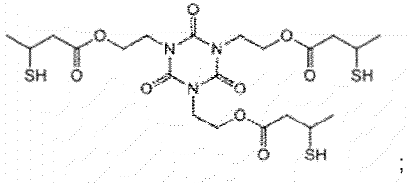
pentaerythritol tetrakis (3-mercaptobutylate) (Karenz MT PE1) 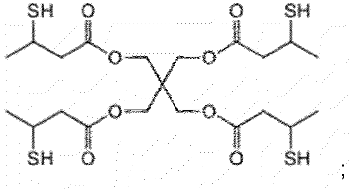
dipentaerythritol hexakis(2-mercaptopropionate) 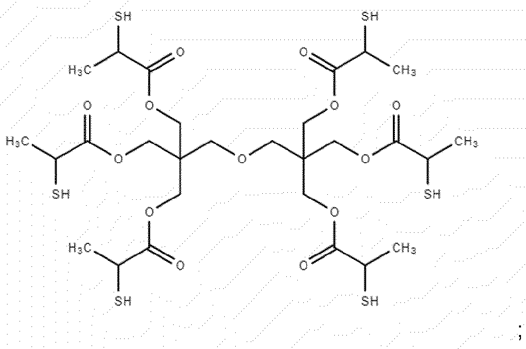
dipentaerythritol hexakis(3-mercaptobutylate) 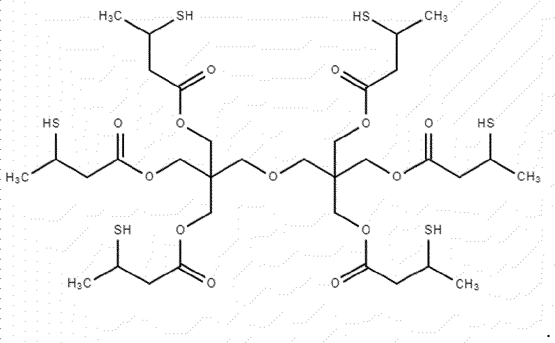
Preferably, the thiol component is pentaerythritol tetrakis (3-mercaptobutylate) (Karenz MT PE1).

The thiol component is present in the adhesive formulation in an amount of from about 36 to about 45 wt%, for example: 36, 37, 38, 39, 40, 41, 42, 43, 44 or 45 wt%.

In an embodiment, the borate component inhibits the activation of polymerization.

In an embodiment, the borate component has the structure: 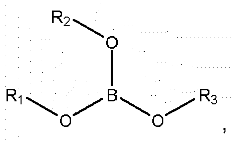 wherein R₁, R₂ and R₃ are each independently selected from the group consisting of: C₁₋₁₀ alkyl and C₁₋₉ alkyl silyl ether (including trialkyl silyl ethers). Preferably, R₁, R₂ and R₃ are each independently selected from the group consisting of: C₁₋₄alkyl and C₁₋₄alkyl silyl ether (including trialkyl silyl ethers). In an embodiment, the borate component is selected from the group consisting of: triethyl borate, tri-tertiary butyl borate and tris(trimethylsilyl) borate: 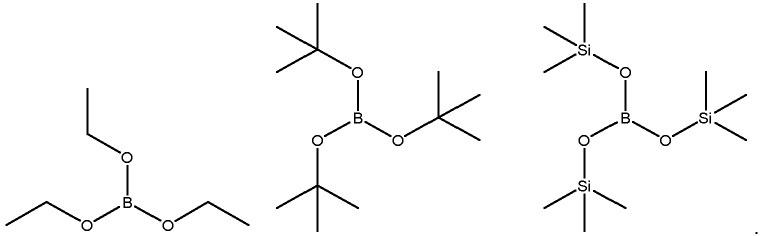 Preferably, the borate component is triethyl borate.

The borate component is present in the adhesive formulation in an amount of from 0.15 to 0.45 wt%.

For example, the borate component may be present in an amount of 0.15, 0.20, 0.25 or 0.30 wt%.

Thiols (i.e. component (C)) react with epoxides (i.e. components (A)/(B)) in a base catalysed addition reaction through a nucleophilic attack to the less steric hindered carbon. An amine catalyst helps to transform the thiol to thiolate anion, which is the true nucleophile that opens the epoxy ring. The alkoxide formed can regenerate the thiolate anion from the remaining thiol groups by a base/acid equilibrium and the reaction further proceeds until completion.

The key requirement of the amine catalyst is the presence of one or more amine groups. Suitable amine catalysts include a plethora of compounds, including amine-containing alkane compounds, amine-containing heteroalkyl compounds, amine-containing cycloalkyl compounds, amine-containing heterocycloalkyl compounds, amine-containing aryl compounds and amine-containing heteroaryl compounds. For example, an amine-containing heteroalkyl compound can include tetraethylenepentamine and 2,2'-(ethane-1,2-diylbis(oxy))bis(ethan-1-amine): 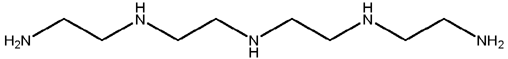 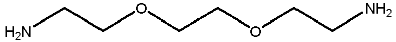 For example, an amine-containing cycloalkyl compound can include 3-(Aminomethyl)-3,5,5-trimethylcyclohexan-1-amine (isophorenediamine) 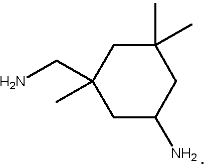 For example, an amine-containing heterocycloalkyl compound can include 2-(piperazin-1-yl)ethan-1-amine (aminoethylpiperazine) 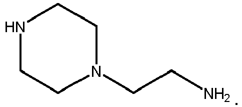 For example, an amine-containing heteroaryl compound can include imidazole: 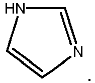 In a preferred embodiment, the amine catalyst is an imidazole compound.

A latent catalyst (i.e. component (E)) is a catalyst that exhibits no activity or negligible activity under "normal" conditions, but becomes active through an "external stimulation" / "activation", such as heating. Latent catalysts therefore allow the preparation of one-pot curing mixtures as they are not activated at room temperatures (or only have low level "activity"), but become activated when heated. A latent catalyst component might be an "encapsulated catalyst component", which includes materials that contain the catalyst compound along with an encapsulating polymer to ensure the catalyst compound is "contained". Containment of the catalyst compound precludes (or minimises) reaction of the catalyst compound with other reaction components. Upon activation, the encapsulating polymer releases the catalyst compound, thereby allowing reaction with other reaction components. The latent catalyst used in the present invention must have an activation temperature of less than 120°C, preferably less than or equal to 110°C and still more preferably less than or equal to 100°C. The latent catalyst used in the present invention can have an activation temperature of more than 30°C, preferably more than 40°C and still more preferably more than 50°C. Activation can occur as a result of heating, which melts or otherwise degrades the encapsulating polymer. The latent catalyst used in the present invention must have a melting point of less than 120°C, preferably less than or equal to 110°C and still more preferably less than or equal to 100°C. The latent catalyst used in the present invention can have a melting point of more than 30°C, preferably more than 40°C and still more preferably more than 50°C.

Suitable latent catalysts are described in GB1121196, EP138465 or EP193068. Other suitable latent catalysts for use herein include commercially available ones, such as Evonik, Anchor 1040/1115. British Patent 1,121,196 describes a reaction product of phthalic anhydride and an aliphatic polyamine, more particularly a reaction product of approximately equimolar proportions of phthalic acid and diethylamine triamine. A latent catalyst of this type is available commercially from Ciba Geigy AG under the trade mark CIBA HT 9506.

Yet another type of latent catalyst is a reaction product of (i) a polyfunctional epoxy compound, (ii) an imidazole compound such as 2-ethyl-4-methylimidazole and (iii) phthalic anhydride. The polyfunctional epoxy compound may be any compound having two or more epoxy groups in the molecule as described in U.S. Pat. No. 4,546,155. A latent catalysts of this type is commercially available from Ajinomoto Co. Inc. under the trade mark AJICURE PN-23, is believed to be an adduct of EPON 828 (bisphenol type epoxy resin epoxy equivalent 184-194, commercially available from Shell Chemical Co.), 2-ethyl-4-methylimidazole and phthalic anhydride.

Other suitable latent catalysts are those given in U.S. Pat. No. 5,077,376, and those of U.S. Pat. No. 5,430,112 patent termed "amine adduct latent accelerators", or the reaction product of a compound having one or more isocyanate groups in its molecule with a compound having at least one primary or secondary amino group in its molecule.

Additional latent catalysts include 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethylimidazole, 2,4-diamino-8-2-methylimidazolyl-(1)-ethyl-5-triazine, additional products of triazine with isocyanuric acid, succinohydrazide, adipohydrazide, isophtholohydrazide, o-oxybenzohydrazide and salicylohydrazide.

Other commercially available latent catalysts from Ajinomoto include Ajicure MY-24 and Ajicure PN23.

In a preferred embodiment, the latent catalyst is an "encapsulated imidazole component", which is a material that contains an imidazole compound along with an encapsulating polymer to ensure the imidazole compound is contained. Containment of the imidazole compound precludes (or minimises) reaction of the imidazole compound with other reaction components. Upon activation, the encapsulating polymer releases the imidazole compound, thereby allowing reaction with other reaction components. The latent catalyst used in the present invention must have an activation temperature of less than 120°C, preferably less than or equal to 110°C and still more preferably less than or equal to 100°C. The latent catalyst used in the present invention can have an activation temperature of more than 30°C, preferably more than 40°C and still more preferably more than 50°C. "Activation" can occur as a result of heating, which melts or otherwise degrades the encapsulating polymer. The latent catalyst used in the present invention must have a melting point of less than 120°C, preferably less than or equal to 110°C and still more preferably less than or equal to 100°C. The latent catalyst used in the present invention can have a melting point of more than 30°C, preferably more than 40°C and still more preferably more than 50°C.

In a preferred embodiment, the latent catalyst is the specific encapsulated imidazole component, Technicure LC-80. Technicure LC-80 has a structure: 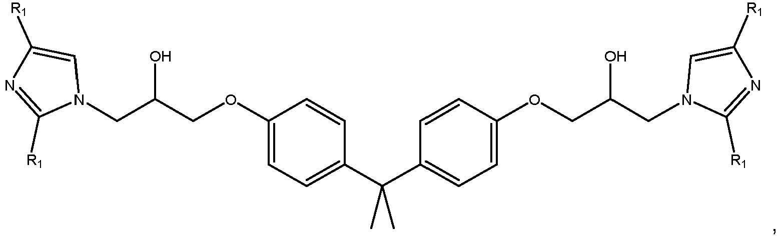 wherein each R₁ is independently H or Me. The activation temperature of Technicure LC-80 is 90-110°C. The melting point of Technicure LC-80 is 90-110°C.

In the case of the specific encapsulated imidazole component, Technicure LC-80, this material has a melting point at elevated temperatures. As Technicure LC-80 is heated, melting / degradation of the encapsulating polymer begins, thereby releasing the imidazole compound and allowing the reaction between the imidazole compound and other reaction components to begin.

In an embodiment, the latent catalyst component is present in the formulation in an amount of from about 0.1 to 10 wt%. In an embodiment, the latent catalyst component is present in the formulation in an amount of from about 0.25 to 10 wt%. In an embodiment, the latent catalyst component is present in the formulation in an amount of from about 0.5 to 10 wt%. In an embodiment, the latent catalyst component is present in the formulation in an amount of from about 0.75 to 10 wt%. In an embodiment, the latent catalyst component is present in the formulation in an amount of from about 1 to 10 wt%. In an embodiment, the latent catalyst component is present in the formulation in an amount of from about 1.25 to 10 wt%. In an embodiment, the latent catalyst component is present in the formulation in an amount of from about 1.5 to 10 wt%. In an embodiment, the latent catalyst component is present in the formulation in an amount of from about 1.75 to 10 wt%. In an embodiment, the latent catalyst component is present in the formulation in an amount of from about 2 to 10 wt%.

In an embodiment, the latent catalyst component is present in the formulation such that the following equation is satisfied: wt% of (E) / [wt% of (A) + wt% of (B)] x 100 > 4.1. In an embodiment, the latent catalyst component is present in the formulation such that the following equation is satisfied: wt% of (E) / [wt% of (A) + wt% of (B)] x 100 > 4.2. In an embodiment, the latent catalyst component is present in the formulation such that the following equation is satisfied: wt% of (E) / [wt% of (A) + wt% of (B)] x 100 > 4.3. In an embodiment, the latent catalyst component is present in the formulation such that the following equation is satisfied: wt% of (E) / [wt% of (A) + wt% of (B)] x 100 > 4.4. In an embodiment, the latent catalyst component is present in the formulation such that the following equation is satisfied: wt% of (E) / [wt% of (A) + wt% of (B)] x 100 > 4.5. In an embodiment, the latent catalyst component is present in the formulation such that the following equation is satisfied: wt% of (E) / [wt% of (A) + wt% of (B)] x 100 > 4.6. In an embodiment, the latent catalyst component is present in the formulation such that the following equation is satisfied: wt% of (E) / [wt% of (A) + wt% of (B)] x 100 > 4.7. In an embodiment, the latent catalyst component is present in the formulation such that the following equation is satisfied: wt% of (E) / [wt% of (A) + wt% of (B)] x 100 > 4.8.

In an embodiment, the adhesive formulation further includes one or more additional components, including fillers and colourants. In an embodiment, the adhesive formulation further includes one or more fillers, for example fumed silica and/or glass beads. Aerosil R202 is an example of a fumed silica that is commercially available. Solesphere NP30 is an example of a glass bead that is commercially available. In an embodiment, the adhesive formulation further includes one or more colourants, for example black pigment, e.g. carbon black, and/or a matte agent, e.g. Lanco Matt 2000.

In an embodiment, when present in the adhesive formulation, the fumed silica is present in an amount of up to about 7 wt%. In an embodiment, when present in the adhesive formulation, the fumed silica is present in an amount of up to about 6 wt%. In an embodiment, when present in the adhesive formulation, the fumed silica is present in an amount of up to about 5 wt%. In an embodiment, when present in the adhesive formulation, the fumed silica is present in an amount of up to about 4 wt%. In an embodiment, the fumed silica is present in the formulation in an amount of from about 0.1 to 3.5 wt%. In an embodiment, the fumed silica is present in the formulation in an amount of from about 0.25 to 3.5 wt%. In an embodiment, the fumed silica is present in the formulation in an amount of from about 0.5 to 3.5 wt%. In an embodiment, the fumed silica is present in the formulation in an amount of from about 0.75 to 3.5 wt%. In an embodiment, the fumed silica is present in the formulation in an amount of from about 1 to 3.5 wt%. In an embodiment, the fumed silica is present in the formulation in an amount of from about 1.25 to 3.5 wt%. In an embodiment, the fumed silica is present in the formulation in an amount of from about 1.5 to 3.5 wt%. In an embodiment, the fumed silica is present in the formulation in an amount of from about 1.75 to 3.5 wt%. In an embodiment, the fumed silica is present in the formulation in an amount of from about 2 to 3.5 wt%.

In an embodiment, when present in the adhesive formulation, the glass beads are present in an amount of up to about 30 wt%. In an embodiment, when present in the adhesive formulation, the glass beads are present in an amount of up to about 25 wt%. In an embodiment, when present in the adhesive formulation, the glass beads are present in an amount of up to about 20 wt%. In an embodiment, when present in the adhesive formulation, the glass beads are present in an amount of up to about 16 wt%. In an embodiment, the glass beads is present in the formulation in an amount of from about 0.1 to 16 wt%. In an embodiment, the glass beads is present in the formulation in an amount of from about 1 to 16 wt%. In an embodiment, the glass beads is present in the formulation in an amount of from about 2 to 16 wt%. In an embodiment, the glass beads is present in the formulation in an amount of from about 3 to 16 wt%. In an embodiment, the glass beads is present in the formulation in an amount of from about 4 to 16 wt%. In an embodiment, the glass beads is present in the formulation in an amount of from about 5 to 16 wt%. In an embodiment, the glass beads is present in the formulation in an amount of from about 6 to 16 wt%. In an embodiment, the glass beads is present in the formulation in an amount of from about 7 to 16 wt%. In an embodiment, the glass beads is present in the formulation in an amount of from about 8 to 16 wt%.

In an embodiment, when present in the adhesive formulation, the black pigment is present in an amount of up to about 1 wt%. In an embodiment, when present in the adhesive formulation, the black pigment is present in an amount of up to about 0.9 wt%. In an embodiment, when present in the adhesive formulation, the black pigment is present in an amount of up to about 0.8 wt%. In an embodiment, when present in the adhesive formulation, the black pigment is present in an amount of up to about 0.7 wt%. In an embodiment, when present in the adhesive formulation, the black pigment is present in an amount of up to about 0.6 wt%. In an embodiment, when present in the adhesive formulation, the black pigment is present in an amount of up to about 0.5 wt%. In an embodiment, the black pigment is present in the formulation in an amount of from about 0.05 to 1 wt%. In an embodiment, the black pigment is present in the formulation in an amount of from about 0.05 to 0.9 wt%. In an embodiment, the black pigment is present in the formulation in an amount of from about 0.05 to 0.8 wt%. In an embodiment, the black pigment is present in the formulation in an amount of from about 0.05 to 0.7 wt%. In an embodiment, the black pigment is present in the formulation in an amount of from about 0.05 to 0.6 wt%. In an embodiment, the black pigment is present in the formulation in an amount of from about 0.05 to 0.5 wt%. In an embodiment, the black pigment is present in the formulation in an amount of from about 0.1 to 0.4 wt%. In an embodiment, the black pigment is present in the formulation in an amount of from about 0.1 to 0.3 wt%.

In an embodiment, when present in the adhesive formulation, the matte agent is present in an amount of up to about 5wt%. In an embodiment, when present in the adhesive formulation, the matte agent is present in an amount of up to about 4.5 wt%. In an embodiment, when present in the adhesive formulation, the matte agent is present in an amount of up to about 4 wt%. In an embodiment, when present in the adhesive formulation, the matte agent is present in an amount of up to about 3.5 wt%. In an embodiment, when present in the adhesive formulation, the matte agent is present in an amount of up to about 3 wt%. In an embodiment, the matte agent is present in the formulation in an amount of from about 0.05 to 5 wt%. In an embodiment, the matte agent is present in the formulation in an amount of from about 0.05 to 4.5 wt%. In an embodiment, the matte agent is present in the formulation in an amount of from about 0.05 to 4 wt%. In an embodiment, the matte agent is present in the formulation in an amount of from about 0.05 to 3.5 wt%. In an embodiment, the matte agent is present in the formulation in an amount of from about 0.05 to 3 wt%. In an embodiment, the matte agent is present in the formulation in an amount of from about 0.5 to 5 wt%. In an embodiment, the matte agent is present in the formulation in an amount of from about 0.5 to 4.5 wt%. In an embodiment, the matte agent is present in the formulation in an amount of from about 0.5 to 4 wt%. In an embodiment, the matte agent is present in the formulation in an amount of from about 0.5 to 3.5 wt%. In an embodiment, the matte agent is present in the formulation in an amount of from about 0.5 to 3 wt%, for example 1 wt%, 2 wt% or 3 wt%.

In an embodiment, the adhesive formulation further includes one or more additional components, including monofunctional epoxy components. In an embodiment, the monofunctional epoxy component includes an epoxy group having an alkyl group of about 4 to about 28 carbon atoms, a glycidyl ether having an alkyl group of about 4 to about 28 carbon atoms, a glycidyl ester having an alkyl group of about 4 to about 28 carbon atoms, a glycidyl ester having an aryl group of about 6 to about 28 carbon atoms, a glycidyl ester having an aralkyl group of about 7 to about 28 carbon atoms, an epoxy group having an alkyl ether group of about 4 to about 28 carbon atoms, a glycidyl ether having an alkyl ether group of about 4 to about 28 carbon atoms, a glycidyl ester having an alkyl ether group of about 4 to about 28 carbon atoms, a glycidyl ester having an aryl ether group of about 6 to about 28 carbon atoms, a glycidyl ester having an aralkyl ether group of about 7 to about 28 carbon atoms, an epoxy group having a silyl alkyl group of about 4 to about 28 carbon atoms, a glycidyl ether having a silyl alkyl group of about 4 to about 28 carbon atoms, a glycidyl ester having a silyl alkyl group of about 4 to about 28 carbon atoms, a glycidyl ester having a silyl aryl group of about 6 to about 28 carbon atoms, a glycidyl ester having a silyl aralkyl group of about 7 to about 28 carbon atoms, an epoxy group having a silyl ether alkyl group of about 4 to about 28 carbon atoms, a glycidyl ether having a silyl ether alkyl group of about 4 to about 28 carbon atoms, a glycidyl ester having a silyl ether alkyl group of about 4 to about 28 carbon atoms, a glycidyl ester having a silyl ether aryl group of about 6 to about 28 carbon atoms, a glycidyl ester having a silyl ether aralkyl group of about 7 to about 28 carbon atoms.

Commercially available monofunctional epoxy components include those from Hexion, under the trade designations Cardura E10P (glycidyl ester of neodecandoic acid), Heloxy Mod 63 (phenyl glycidyl ether) and Heloxy Mod 61 (butyl glycidyl ether). In an embodiment, the monofunctional epoxy component has the structure:

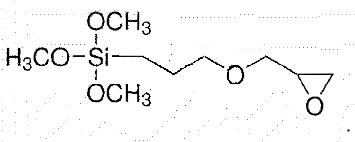

In an embodiment, when present in the adhesive formulation, the monofunctional epoxy component is present in an amount of up to about 5wt%. In an embodiment, when present in the adhesive formulation, the monofunctional epoxy component is present in an amount of up to about 4 wt%. In an embodiment, when present in the adhesive formulation, the monofunctional epoxy component is present in an amount of up to about 3 wt%. In an embodiment, when present in the adhesive formulation, the monofunctional epoxy component is present in an amount of up to about 2 wt%. In an embodiment, when present in the adhesive formulation, the monofunctional epoxy component is present in an amount of up to about 1 wt%.

### DESCRIPTION OF THE FIGURES

Figure 1 - Set up showing the testing rig used for the overlap shear measurement, an Instron 3300 series with 2716 series grips.
Figure 2 - DSC of 1934-42 having 1 wt% LC-80 (2.44 phr).

### GENERAL SYNTHETIC PROCESS

The following is a generic process used to produce the following examples.

Components (A), (B) and (D) (i.e. the epoxy resin component + epoxy rubber component + borate component) were added to a mixing cup according to the formulation and mixed with a speed mixer at 1500 rpm for 1 minute. A monofunctional epoxy component is added here alongside other chemicals if the formulation includes it.

Component (E) (i.e. the latent catalyst component) was added according to the formulation and was mixed by hand for about 30 seconds. The mixture was then mixed in the speed mixer at 1500 rpm for 30 seconds.

The filler components, if present, are then added. First the fumed silica was added according to the formulation and was mixed by hand for about 30 seconds. The mixture was then mixed in the speed mixer at 1500 rpm for 30 seconds. A matte agent is added if the formulation includes it and was mixed by hand for about 30 seconds. The mixture was then mixed in the speed mixer at 1500 rpm for 30 seconds. Next the glass beads was added according to the formulation and was mixed by hand for about 30 seconds. The mixture was then mixed in the speed mixer at 1500 rpm for 30 seconds.

The cup was put into a freezer to cool down for 15-20 minutes.

Component (C) (i.e. the thiol component) was added according to the formulation. The mixture is then mixed at 1500 rpm for 2 minutes, in 1 minute interval. If mixture is not homogenous, additional mixing at 1500 rpm for 30 seconds interval can be done for 2 more time. If more mixing is needed, the mixture needs to be cooled down in the fridge again before mixing.

After the mixture is confirmed as homogenous, any colourant is added according to the formulation. The mixture is then mixed for 1500 rpm for 30 seconds.

The mixture is then put into the freezer overnight to let the filler settle.

### Stability measurement:

In order to assess the stability, several 5-10 g of sample are separated from the main batch. The viscosity of one of the samples is measured straight away to obtain the "day 0 viscosity". The other samples are left out at room temperature for at least 3 days. After 3 days, the mixture viscosity is tested, and the number are compared to "day 0 viscosity".

The stability days are determined as the number of days that the viscosity change is less than 20% of the original values (80-120% of original). Good samples are stable for more than 3 days, preferably at least 4-5 days at room temperature.

The instrument used to measure viscosity is TA instrument Discovery HR 30.

### Onset point measurement:

Differential scanning calorimeters (DSC) is the method in assessing the onset point. The DSC is set up such that the sample is weighed around 8-10mg ± 0.5 mg and set into the DSC thermal chamber. The DSC method used to assess the onset is as such:
Ramp to 180°C at a rate of 10°C/min (from 25°C idle temperature)
Isothermal for 0.5 min
Ramp to -20°C at a rate of 20°C/min.
Isothermal for 0.5 min
Ramp to 50°C at a rate of 10°C/min.

Good samples have an onset point of <62°C.

The instrument used to measure viscosity is TA DSC 250.

### Overlap Shear measurement:

Standard ASTM D1002 is used to assess the overlap shear strength. The substrate of interest in these examples are PC (polycarbonate) bonding to another PC (polycarbonate), i.e. PC-PC.

Polycarbonate substrates are cleaned with IPA (isopropyl alcohol) to remove any dust or particle from the bonding area. The substrates we use are cut to a size of 1"x4", the bonding area is 1"x0.5".

Adhesive is then applied to the bonding area on one substrate, glass spacer with diameter of 4-5 mil (104µm-125µm) are sprinkled on the adhesive, then placed on to the bonding area on the other substrate. Glass spacer is used to make sure that, when the bonds are held down (by hand and then clips), there would still be adhesive in between the gap.

The substrate is pressed down by hand, and then the bonds are held together with clips.

The clipped substrates are put into a convection oven to cure according to the temperature and time, accordingly.

With the clips still attached, the bonds are pulled out of the oven and let sit at room temperature to cool down for at least 1 hour before testing.

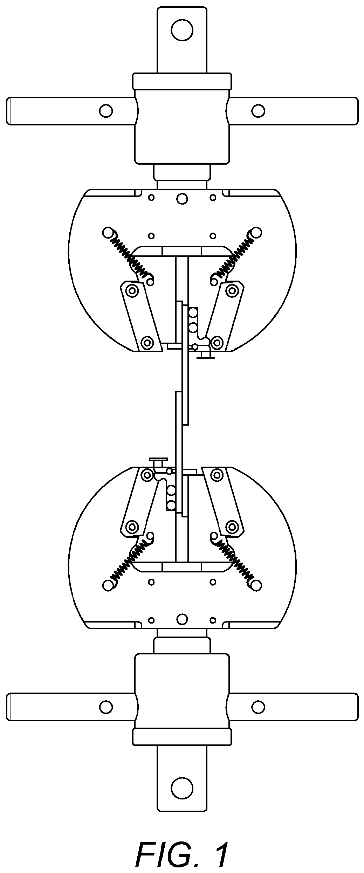

The bonds are pulled with Instron 3300 series with 2716 series grips with 50KN load cell. Spacers, in the form of the same substrate, are put in between the each of the bonding such that the bonds are straight when it was pulled. The pulling rate is 10 mm/min. See Figure 1 for set up.

Good samples have a good PC-PC strength above 4 MPa. Excellent samples have PC-PC strength above 6 MPa.

### Comparative example 1

This example demonstrates that formulations including a *primary* thiol component are not sufficiently stable to be used as commercial adhesive formulations. Guzmán, D. (2015) uses pentaerythritol tetra (3-mercaptopropionate) (PETMP) and Guzmán, D. (2014) uses trimethylolpropane tris(3-mercaptopropionate) as the thiol component, both of these materials are *primary* thiol components.

Guzmán et al (2015) use only 1 phr of latent amine precursor (Technicure LC-80J) in their pentaerythritol tetra (3-mercaptopropionate) (PETMP) containing formulation to minimise thermal curing during the preceding photoinitiation stage that results in a temperature increase to ~78°C. Guzmán et al (2015) use 2 phr of latent amine precursor (Technicure LC-80J) in their trimethylolpropane tris(3-mercaptopropionate) containing and report thermal curing at ~110°C.

It would be desirable to achieve an onset temperature lower than described in either Guzmán et al (2015) and Guzmán et al (2014). An onset temperature of <62°C would be particularly advantageous. In order to achieve an onset temperature of <62°C, a larger amount of the latent amine precursor Technicure LC-80J (around 5 wt%) was added to the Guzmán et al (2014) primary thiol component containing formulation. This amount of Technicure LC-80J is in line with the mid-point of the preferred examples described below (see Example 2). The relative amount of latent amine precursor to the epoxide containing components is 9.26 phr Technicure LC-80 as opposed to only 1 phr used by Guzmán et al (2014) and 2 phr used by Guzmán et al (2014).

In an attempt to improve the stability of the formulation, a stabiliser (triethyl borate) was also added to this comparative formulation. The amount of stabiliser used was around 0.2 wt%, which is in line with the most preferred examples described below (see Example 1).

The comparative formulation is as follows:

| **Materials & Properties** | **1934-27** |
|---|---|
| Bisphenol F (Epon 862) | 26.0521 |
| BPF CTBN (HYPOX RA1341N) | 28.05611 |
| TMPMP | 30.06012 |
| Triethyl borate | 0.200401 |
| Technicure LC-80J | 5.01002 |
| Fumed Silica R202 | 3.006012 |
| Glass bead (NP-30) 5um | 7.61523 |
| | 100 |
| Thiol:Epoxy [EEW wise] | 0.92 |
| Stability | <3 days |
| phr | 9.26 |

Despite using the preferred amount of triethyl borate stabiliser (i.e. ~0.2 wt%), the formulation was found to be not sufficiently stable to be used as a commercial adhesive formulation. The stability of the formulation was less than three days. Following this observation, it was decided that *primary* thiol components are too reactive to provide a viable commercial adhesive formulation. Instead, it was decided to use a *secondary* thiol component in the formulations of the present invention that follow.

### Comparative example 2

This example demonstrates that the amount of thiol component is critical in the binding strength exhibited by the formulation.

In this case the thiol used is a *primary* thiol component, trimethylolpropane tris(3-mercaptopropionate (TMTP) to correspond with the thiol used in Example 1 of JP2021152108A.

In the following table, formulation 1940-34-1 is a close reproduction of Example 1 of JP2021152108A. The number of "parts" in Example 1 of JP2021152108A was used to calculate a wt% for each component. Unfortunately, M05SWD, PN-FJ and SC-1015F were not available to the applicant and so M05SWD was substituted with a functional equivalent, namely Glass Bead (NP-30); PN-FJ was substituted with a functional equivalent, namely LC-80J; and SC-1015F was omitted.

Formulations 1940-34-2, 1940-34-3 and 1940-34-4 are variants of Example 1 of JP2021152108A having increased thiol component (TMTP) at 36, 41 and 46 wt% respectively in order to demonstrate a correlation with the binding strength exhibited by the formulations.

The PC-PC binding strength data show an improvement for formulation 1940-34-2 (36 wt% TMTP) and formulation 1940-34-3 (41 wt% TMTP) relative to formulation 1940-34-1 (14.7 wt% TMTP) and formulation 1940-34-4 (46 wt% TMTP).

| **Example 1 of** JP2021152108A | **Component used** | **1940-34-1** | **1940-34-2** | **1940-34-3** | **1940-34-4** |
|---|---|---|---|---|---|
| EXA-4850-150 | Epon 828 | 22.70 | 22.70 | 22.70 | 22.70 |
| RBK-304H | Hypox RA1340 | 15.10 | 15.10 | 15.10 | 15.10 |
| TMTP | TMTP | 14.70 | 36.00 | 41.00 | 46.00 |
| M05SWD | Glass Bead (NP-30) | 41.50 | 20.20 | 15.20 | 10.20 |
| Triethyl borate | Triethyl borate | 0.30 | 0.30 | 0.30 | 0.30 |
| PN-FJ | LC-80J | 5.30 | 5.30 | 5.30 | 5.30 |
| | Total | 99.60 | 99.60 | 99.60 | 99.60 |
| | phr* | 14.0 | 14.0 | 14.0 | 14.0 |
| | PC-PC strength (MPa) (60C/30min) | 3.81 | 5.05 | 5.94 | 3.39 |

| | | | | | |
|---|---|---|---|---|---|
| phr* = (LC-80J) / [Epon 828 + Hypox RA1340] x 100 | | | | | |

It can therefore be deduced that formulations having an amount of thiol that falls outside the claimed range of 36-45 wt% have a lower binding strength than formulations having an amount of thiol that falls within the claimed range of 36-45 wt%.

Since this comparative example uses a *primary* thiol component (TMTP), the absolute binding strength observed is lower than would be observed for an equivalent formulation having a *secondary* thiol component. This is confirmed by the absolute binding strength observed for a formulation having a similar phr value (phr = 14.0 for 1940-34-1, 1940-34-2, 1940-34-3 and 1940-34-4), for example formulation 1934-24 of Example 2 (phr = 14.6):

| **Materials** | **1934-24** |
|---|---|
| Diglycidyl ether bisphenol F | 25.05 |
| CTBN Epoxy Adduct (BPF Type) | 16.03 |
| Pentaerythritol tetrakis (3-mercaptobutylate) (Karenz MT PE1) | 38.08 |
| Triethyl Borate | 0.20 |
| Technicure LC-80J | 6.01 |
| Fumed Silica | 3.01 |
| Glass bead | 11.62 |
| Total (100%) | 100.00 |
| phr* | 14.63415 |
| PC-PC (60°C / 30 min) | 7.87 MPa |

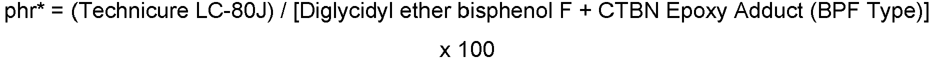

phr* = (Technicure LC-80J) / [Diglycidyl ether bisphenol F + CTBN Epoxy Adduct (BPF Type)] x 100

### Comparative example 3

This example demonstrates that the selection of the latent catalyst is important when seeking to have a formulation which can be cured at lower temperatures of <62°C. In this comparative example a latent catalyst having a melting point of 120-125°C was used, namely PN-H (see https://www.ac-catalysts.com/DOCS/AJICURE/AJICUREGeneral.pdf). The following formulations were produced as per the below table, which closely reproduces the Example of CN117736678.

None of the formulations cured at 60°C, but all required a higher temperature of 100°C to cure:

| **Example of** CN117736678 | **Component used** | **1940-35-1** | **1940-35-2** | **1940-35-3** | **1940-35-4** |
|---|---|---|---|---|---|
| Epikote 828EI | Epon828 | 25.00 | 25.00 | 25.00 | 25.00 |
| MX125 | Hypox RA1340 | 15.00 | 15.00 | 15.00 | 15.00 |
| PE-1 | PE-1 | 31.50 | 36.00 | 45.00 | 46.00 |
| Triethyl borate | Triethyl borate | 0.20 | 0.20 | 0.20 | 0.20 |
| PN-H | PN-H | 5.30 | 5.30 | 5.30 | 5.30 |
| NQ1050, 30HV, AG-609 | Glass bead (NP-30) | 18.00 | 13.50 | 4.50 | 3.50 |
| R202 | R202 | 5.00 | 5.00 | 5.00 | 5.00 |
| | Total | 100.00 | 100.00 | 100.00 | 100.00 |
| | phr | 13.25 | 13.25 | 13.25 | 13.25 |
| | PC-PC strength (100°C/60min) (MPa) | 5.32 | 8.32 | 7.56 | 6.80 |

This example also demonstrates that the amount of thiol component, in this case the *secondary* thiol component PE-1, is critical in the binding strength exhibited by the formulation.

The formulation 1940-35-1 is a close reproduction of the example of CN117736678. Unfortunately, Ti-Pure R706/X-12-967C were not available to the applicant and were omitted.

Formulations 1940-35-2, 1940-35-3 and 1940-35-4 are variants having increased thiol component (PE-1) at 36, 45 and 46 wt% respectively in order to demonstrate a correlation with the binding strength exhibited by the formulation.

The PC-PC binding strength data show an improvement for formulation 1940-35-2 (36 wt% PE-1) and formulation 1940-35-3 (45 wt% PE-1) relative to formulation 1940-35-1 (31.5 wt% PE-1) and formulation 1940-35-4 (46 wt% PE-1).

It can therefore be deduced that formulations having an amount of thiol that falls outside the claimed range of 36-45 wt% have a lower binding strength than formulations having an amount of thiol that falls within the claimed range of 36-45 wt%.

### Example 1: Stabilizer content

This example was designed to determine the optimum amount of the borate stabilizer component. The following examples were produced. Formulations 1934-17#, 1934-18# and 1934-20# fall outside the scope of the present invention.

| **Materials** | **1934-17#** | **1934-18#** | **1934-20#** | **1934-21 #** | **1934-22** |
|---|---|---|---|---|---|
| Diglycidyl ether bisphenol F | 25.05 | 25.05 | 25.05 | 25.05 | 25.05 |
| CTBN Epoxy Adduct (BPF Type) | 16.03 | 16.03 | 16.03 | 16.03 | 16.03 |
| Pentaerythritol tetrakis (3-mercaptobutylate) (Karenz MT PE1) | 38.08 | 38.08 | 38.08 | 38.08 | 38.08 |
| Triethyl Borate | 0.50 | 1.00 | 0.05 | 0.10 | 0.30 |
| Technicure LC-80J | 7.01 | 7.01 | 7.01 | 7.01 | 7.01 |
| Fumed Silica | 3.01 | 3.01 | 3.01 | 3.01 | 3.01 |
| Glass bead | 10.32 | 9.82 | 10.77 | 10.72 | 10.52 |
| Total (100%) | 100.00 | 100.00 | 100.00 | 100.00 | 100.00 |
| phr* | 17.07317 | 17.07317 | 17.07317 | 17.07317 | 17.07317 |

| | | | | | |
|---|---|---|---|---|---|
| # = formulation falls outside scope of invention. | | | | | |

$phr * = \left(Technicure LC-80J\right) / \left[Diglycidyl ether bisphenol F+CTBN Epoxy Adduct \left(BPF Type\right)\right] \times 100$

The above five formulations were analysed to identify the onset point and stability. The onset point and stability results are shown in the following table:

| **Batch** | **TE Borate Content** | **Onset Point (°C)** | **Stability** |
|---|---|---|---|
| 1934-20# | 0.05% | 54.62 | < 3 days |
| 1934-21# | 0.10% | 56.01 | 4-5 days |
| 1934-22 | 0.30% | 61.61 | >7 days |
| 1934-17# | 0.50% | 68.99 | >10 days |
| 1934-18# | 1% | 77.48 | >10 days |

As can be seen from the following table:
- too small an amount of stabilizer results in a formulation that is unstable;
- too high an amount of stabilizer results in a formulation that has an onset point that is too high (onset point ≥62°C).

The most preferred amount of stabilizer was taken to be 0.2 wt%. This amount of stabilizer was used in the following example.

### Example 2: Encapsulated imidazole content

This example was designed to determine the optimum amount of the encapsulated imidazole component. The following examples were produced. Formulations 1934-43# and 1934-42# fall outside the scope of the present invention.

| **Materials** | **1934-43#** | **1934-42#** | **1934-41** | **1934-40** | **1934-39** | **1934-23** | **1934-24** | **1934-25** | **1934-26** |
|---|---|---|---|---|---|---|---|---|---|
| Diglycidyl ether bisphenol F | 25.05 | 25.05 | 25.05 | 25.05 | 25.05 | 25.05 | 25.05 | 25.05 | 25.05 |
| CTBN Epoxy Adduct (BPF Type) | 16.03 | 16.03 | 16.03 | 16.03 | 16.03 | 16.03 | 16.03 | 16.03 | 16.03 |
| Pentaerythritol tetrakis (3-mercaptobutylate) (Karenz MT PE1) | 38.08 | 38.08 | 38.08 | 38.08 | 38.08 | 38.08 | 38.08 | 38.08 | 38.08 |
| Triethyl Borate | 0.20 | 0.20 | 0.20 | 0.20 | 0.20 | 0.20 | 0.20 | 0.20 | 0.20 |
| Technicure LC-80J | | 1.00 | 2.00 | 3.01 | 4.01 | 5.01 | 6.01 | 8.02 | 9.02 |
| Fumed Silica | 3.01 | 3.01 | 3.01 | 3.01 | 3.01 | 3.01 | 3.01 | 3.01 | 3.01 |
| Glass bead | 17.64 | 16.63 | 15.63 | 14.63 | 13.63 | 12.63 | 11.62 | 9.62 | 8.62 |
| Total (100%) | 100.00 | 100.00 | 100.00 | 100.00 | 100.00 | 100.00 | 100.00 | 100.00 | 100.00 |
| phr* | 0 | 2.439024 | 4.878049 | 7.317073 | 9.756098 | 12.19512 | 14.63415 | 19.5122 | 21.95122 |

| | | | | | | | | | |
|---|---|---|---|---|---|---|---|---|---|
| # = formulation falls outside scope of invention. | | | | | | | | | |

$phr * = \left(Technicure LC-80J\right) / \left[Diglycidyl ether bisphenol F+CTBN Epoxy Adduct \left(BPF Type\right)\right] \times 100$

The above nine formulations were analyzed to identify the onset point and overlap shear strength, which are shown in the following table:

| | **Technicure LC-80J Content** | **Phr** | **Onset Temperature (°C)** | **PC-PC (60°C, 60 min) (MPa)** | **PC-PC (60°C, 30 min) (MPa)** | **PC-PC (55°C, 60 min) (MPa)** |
|---|---|---|---|---|---|---|
| 1934-43# | 0% | 0 | X | | | |
| 1934-42# | 1% | 2.44 | 87.5 | 0.92 | X | |
| 1934-41 | 2% | 4.88 | 61.41 | 7.02 | 2.37 | |
| 1934-40-1 | 3% | 7.32 | 60.82 | 9.58 | 2.88 | 9.77 |
| 1934-39-1 | 4% | 9.76 | 59.76 | 7.43 | 5.23 | 9.72 |
| 1934-23 | 5% | 12.20 | 59.5 | 7.49 | 8.34 | 8.28 |
| 1934-24 | 6% | 14.63 | 59.53 | 6.58 | 7.87 | |
| 1934-25 | 8% | 19.51 | 58.18 | 4.39 | 7.57 | |
| 1934-26 | 9% | 21.95 | 57.39 | 3.32 | 6.16 | |

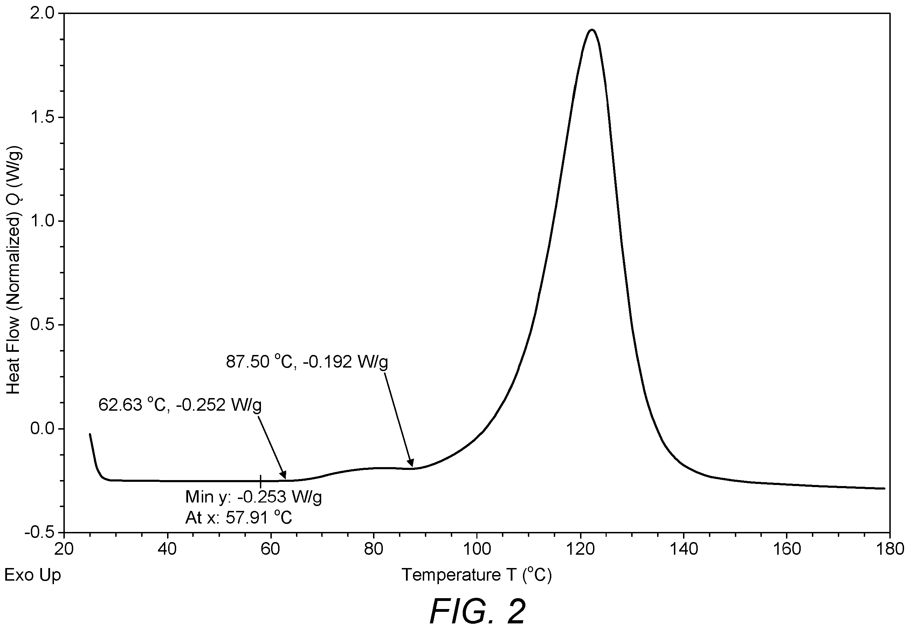

This example demonstrates the effect that the amount of encapsulated imidazole content relative to the epoxy components of the formulation has on the onset point and overlap shear strength. As can be seen from the table:
- Formulation 1934-43# includes no encapsulated imidazole and does not cure;
- Formulation 1934-42# includes only 2.44 parts encapsulated imidazole (Technicure LC-80) per hundred resin (phr) and was found to have an onset temperature of 87.50°C, i.e. much higher than the <62°C onset temperature target. This is apparent from the DSC of Figure 2.

For that reason, a lower limit of 4 for the parts latent amine precursor (Technicure LC-80) per hundred resin (phr) has been included in the definition of the composition of the invention.

### Example 4: Glass bead content:

This example was designed to show the effects of the presence and amount of the glass bead components on the properties of the adhesive formulations. In the exemplified formulations, the glass bead component is usually present in the formulations, but is an optional component and is non-essential to the final product. The following example was produced.

| **Materials** | **1934-23** | **1934-23-2** | **1934-23-3** |
|---|---|---|---|
| Diglycidyl ether bisphenol F | 25.05 | 26.74 | 28.67 |
| CTBN Epoxy Adduct (BPF Type) | 16.03 | 17.11 | 18.35 |
| Pentaerythritol tetrakis (3-mercaptobutylate) (Karenz MT PE1) | 38.08 | 40.64 | 43.58 |
| Triethyl Borate | 0.20 | 0.21 | 0.23 |
| Technicure LC-80J | 5.01 | 5.35 | 5.73 |
| Fumed Silica | 3.01 | 3.21 | 3.44 |
| Glass bead | 12.63 | 6.74 | 0 |
| Total (100%) | 100.00 | 100.00 | 100.00 |
| phr* | 12.19512 | 12.19512 | 12.19512 |

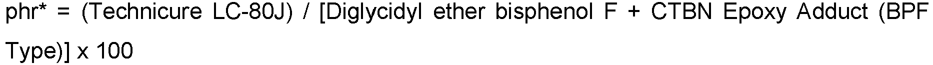

phr* = (Technicure LC-80J) / [Diglycidyl ether bisphenol F + CTBN Epoxy Adduct (BPF Type)] x 100

The above formulations were analyzed to identify the onset point and overlap shear strength, which are shown in the following table alongside 1934-23:

| | **Technicure LC-80J Content** | **Phr** | **Onset Temperature (°C)** | **PC-PC (60°C, 60 min) (MPa)** | **PC-PC (60°C, 30 min) (MPa)** | **PC-PC (55°C, 60 min) (MPa)** |
|---|---|---|---|---|---|---|
| 1934-23 | 5% | 12.20 | 59.5 | 7.49 | 8.34 | 8.28 |
| 1934-23-2 | 5.35 | 12.20 | 59.98 | 6.74 | 8.65 | |
| 1934-23-3 | 5.73 | 12.20 | 61.54 | 5.79 | 6.74 | |

This example demonstrates that the presence and amount of glass bead does not have a detrimental impact on the onset point and overlap shear strength.

### Example 5: Inclusion of monofunctional epoxy components

This example was designed to show the effects of the presence of a monofunctional epoxy components on the properties of the adhesive formulations. Monofunctional epoxy components are optional components and are non-essential to the final product. The following example was produced.

| **Materials** | **1934-23** | **1934-44** |
|---|---|---|
| Diglycidyl ether bisphenol F | 25.05 | 25.05 |
| CTBN Epoxy Adduct (BPF Type) | 16.03 | 16.03 |
| Epoxy Silane | 0 | 1.00 |
| Pentaerythritol tetrakis (3-mercaptobutylate) (Karenz MT PE1) | 38.08 | 38.08 |
| Triethyl Borate | 0.20 | 0.20 |
| Technicure LC-80J | 5.01 | 5.01 |
| Fumed Silica | 3.01 | 3.01 |
| Glass bead | 12.63 | 11.62 |
| Total (100%) | 100.00 | 100.00 |
| phr** | 12.19512 | 12.19512 |

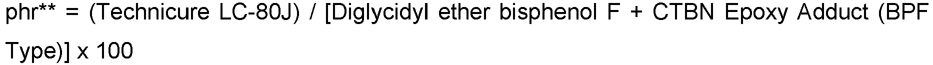

phr** = (Technicure LC-80J) / [Diglycidyl ether bisphenol F + CTBN Epoxy Adduct (BPF Type)] x 100

This material is a close analogue to 1934-23, described above. The properties of each of these formulations is shown in the following table. As can be seen, the presence of the monofunctional epoxy component has the advantage of reducing the onset temperature, but has a concomitant reduction on the overlap shear strength:

| | **Technicure LC-80J Content** | **Phr** | **Monofunctio nal epoxy components** | **Onset Tempera ture (°C)** | **PC-PC (60°C, 60 min) (MPa)** | **PC-PC (60°C, 30 min) (MPa)** | **PC-PC (55°C, 60 min) (MPa)** |
|---|---|---|---|---|---|---|---|
| 1934-23 | 5% | 12.2 0 | 0% | 59.5 | 7.49 | 8.34 | 8.28 |
| 1934-44 | 5% | 12.2 0 | 1% | 55.85 | 4.04 | 6.19 | - |

For that reason, when present in the formulation, an amount of up to 5 wt% monofunctional epoxy component may be included.

### Example 6: Effect of colourant and matting agent

This example was designed to determine the effects that different colourant and matting agents might have on the properties of the adhesive formulations. Colourants and matting agents are optional components and are non-essential to the final product. The following examples were produced.

| **Materials** | **1934-23-B1** | **1934-23-B2** | **1934-23-B3** | **1934-23-B4** | **1934-23-B5** | **1934-23-B6** | **1934-23-B7** |
|---|---|---|---|---|---|---|---|
| Diglycidyl ether bisphenol F | 25.00 | 25.00 | 25.00 | 25.00 | 25.00 | 25.00 | 29.27 |
| CTBN Epoxy Adduct (BPF Type) | 16.00 | 16.00 | 16.00 | 16.00 | 16.00 | 16.00 | 18.74 |
| Pentaerythritol tetrakis (3-mercaptobutylate) (Karenz MT PE1) | 38.00 | 38.00 | 38.00 | 38.00 | 38.00 | 38.00 | 44.50 |
| Triethyl Borate | 0.20 | 0.20 | 0.20 | 0.20 | 0.20 | 0.20 | 0.23 |
| Technicure LC-80J | 5.00 | 5.00 | 5.00 | 5.00 | 5.00 | 5.00 | 5.85 |
| Carbon Black | 0.20 | | 0.20 | | 0.20 | 0.20 | 0.23 |
| NBS Dye | | 0.20 | | 0.20 | | | |
| Fumed Silica | 2.00 | 2.00 | 3.00 | 3.00 | 1.00 | | 1.17 |
| Matte Agent | 1.00 | 1.00 | | | 2.00 | 3.00 | |
| Glass bead | 12.60 | 12.60 | 12.60 | 12.60 | 12.60 | 12.60 | |
| Total (100%) | 100.00 | 100.00 | 100.00 | 100.00 | 100.00 | 100.00 | 100.00 |
| phr* | 12.19512 | 12.19512 | 12.19512 | 12.19512 | 12.19512 | 12.19512 | 12.19512 |

The above seven formulations were analysed to identify the stability, onset point, and overlap shear strength, which are shown in the following table:

| | **Aerosil R202** | **Lanco Matt 2000** | **Dye** | **Onset Point (°C)** | **Stability (days)** | **PC-PC str (60°C 30 min) (MPa)** |
|---|---|---|---|---|---|---|
| 1934-23-B3 | 3% | 0% | 0.2% Carbon Black | 60.21 | >6 days | 8.8 |
| 1934-23-B1 | 2% | 1% | 0.2% Carbon Black | 56.65 | >6 days | 8.52 |
| 1934-23-B5 | 1% | 2% | 0.2% Carbon Black | 53.09 | >5 days | 7.65 |
| 1934-23-B6 | 0% | 3% | 0.2% Carbon Black | 51.95 | >5 days | 7.12 |
| 1934-23-B4 | 3% | 0% | 0.2% NBS Dye | 57 | <3 days | 10.38 |
| 1934-23-B2 | 2% | 1% | 0.2% NBS Dye | 55.24 | <3 days | 8.83 |
| 1934-23-B7 | 1.17% | 0% | 0.23% Carbon Black | 60.15 | > 7 days | 5.83 |

This example demonstrates that certain dyes can be added to the formulation without adversely affecting the stability, onset point, and overlap shear strength.

### Example 7: Effect of thiol component

This example demonstrates that formulations within the range of 36-45 wt% of a secondary thiol component, PE-1, demonstrate excellent binding strength. The binding strength data show a peak binding strength in the middle of the 36-45 wt% range (i.e. at 41 wt%). Binding strength at either end of this range is still excellent, but the trend illustrates that the binding strength is lower outside the 36-45 wt% range.

| | **Example corresponding to Example 9A of** JP2021152108A**#** | **1940-36-1 (36% PE-1 variant)** | **1940-36-2 (41% PE-1 variant)** | **1940-36-3 (46% PE-1 variant)#** |
|---|---|---|---|---|
| **Component** | **Wt Percentage** | **Wt Percentage** | **Wt Percentage** | **Wt Percentage** |
| Epon 828 | 23.27 | 23.27 | 23.27 | 23.27 |
| Hypox RA 1340 | 15.52 | 15.52 | 15.52 | 15.52 |
| PE-1 | 12.80 | 36.00 | 41.00 | 46.00 |
| Glass Bead (NP-30) | 42.67 | 19.47 | 14.47 | 9.47 |
| Triethyl borate | 0.31 | 0.31 | 0.31 | 0.31 |
| LC-80J | 5.43 | 5.43 | 5.43 | 5.43 |
| Total | 100.00 | 100.00 | 100.00 | 100.00 |
| phr | 14.0 | 14.0 | 14.0 | 14.0 |
| PC-PC Strength (60C/30min) | *2.66MPa | 8.29MPa | *9.27MPa | 5.62MPa |
| PC-PC Strength (80C/30min) | 4.43MPa | | | |
| | *not fully cured at 60C/30min, with low bonding strength | | *substrate failure (PC break) | |

| | | | | |
|---|---|---|---|---|
| # = formulation falls outside scope of invention. | | | | |

## Claims

1. An adhesive formulation comprising:
(A) an epoxy resin component having two or more epoxide groups per molecule;
(B) an epoxy rubber component having two or more epoxide groups per molecule;
(C) from 36 to about 45 wt% of a thiol component having two or more independently selected secondary or tertiary thiol groups per molecule;
(D) 0.15 wt% to 0.45 wt% of a borate component; and
(E) more than 0.05 wt% to less than 10 wt% of a latent catalyst component, wherein the latent catalyst component is activated at a temperature of <120°C;
such that the following equation is satisfied: wt% of (E) / [wt% of (A) + wt% of (B)] x 100 > 4.

2. The adhesive formulation of claim 1, wherein the epoxy resin component is a polyglycidyl ether of a polyhydric phenol;
optionally wherein the epoxy resin component is a polyglycidyl ether of bisphenol A, bisphenol F, bisphenol AD, catechol or resorcinol.

3. The adhesive formulation of claim 1 or claim 2, wherein the epoxy resin component is diglycidyl ether bisphenol F (DGEBF): 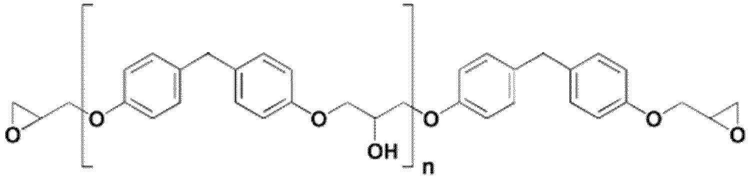 or diglycidyl ether bisphenol A (DGEBA):

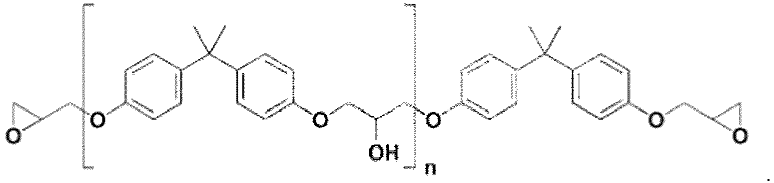

4. The adhesive formulation of any one of claims 1 to 3, wherein the epoxy resin component is present in the adhesive formulation in an amount of from about 15 to about 35 wt%.

5. The adhesive formulation of any one of claims 1 to 4, wherein the epoxy rubber component is an adduct of an epoxide component and a rubber component, which has an average of two or more epoxide groups per molecule;
optionally wherein the epoxy rubber component is an epoxy-terminated adduct of an epoxy resin and at least one rubber component that has epoxide-reactive groups;
further optionally wherein the rubber component is a diene/nitrile copolymer.

6. The adhesive formulation of any one of claims 1 to 5, wherein the epoxy rubber component is a CTBN Epoxy Adduct (BPA Type): 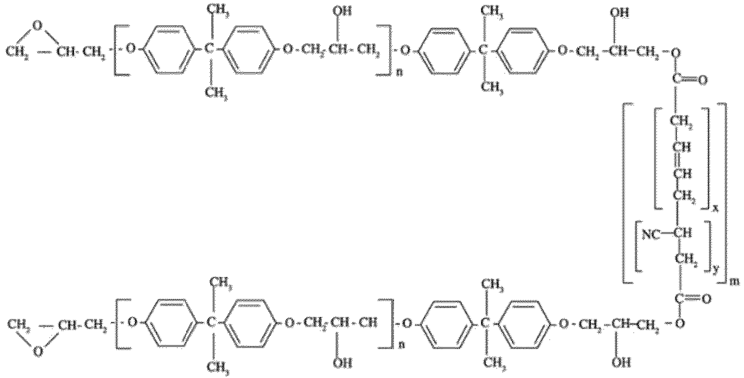 or the epoxy rubber component is a CTBN Epoxy Adduct (BPF Type):

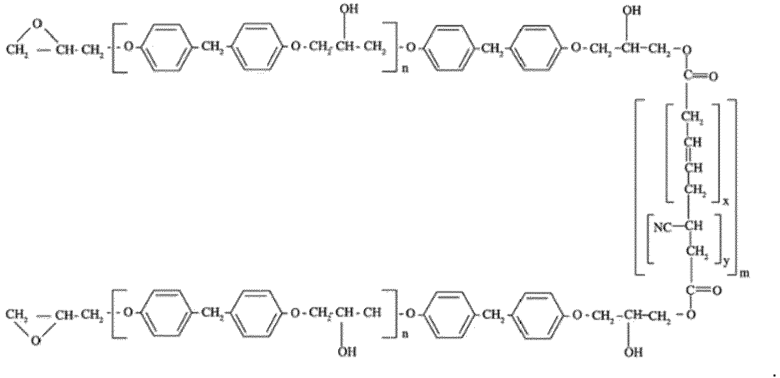

7. The adhesive formulation of any one of claims 1 to 6, wherein the epoxy rubber component is present in the adhesive formulation in an amount of from about 7 to about 26 wt%.

8. The adhesive formulation of any one of claims 1 to 7, wherein the thiol component has an average of two secondary or tertiary thiol groups per molecule; an average of three secondary or tertiary thiol groups per molecule; an average of four secondary or tertiary thiol groups per molecule; an average of five secondary or tertiary thiol groups per molecule; or an average of six secondary or tertiary thiol groups per molecule;
optionally wherein the thiol component is selected from the group consisting of:
1,4-bis (3-mercaptobutyroxy)butane (Karenz MT) 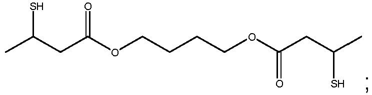
1-4-bis (3-mercaptobutyloxy)butane 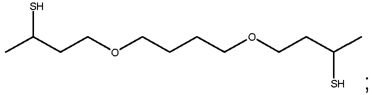
trimethylol propane tris (3-mercaptobutylate) 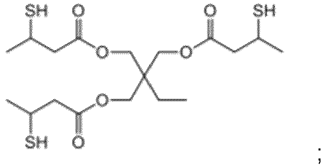
1,3,5-Tris [2-(3-mercaptobutanoyloxy)ethyl]-1,3,5-triazine-2,4,6-(1H,3H,5H)-trione 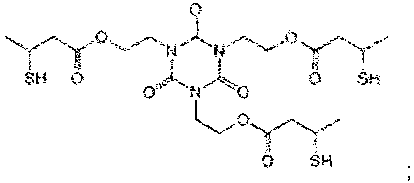
pentaerythritol tetrakis (3-mercaptobutylate) (Karenz MT PE1) 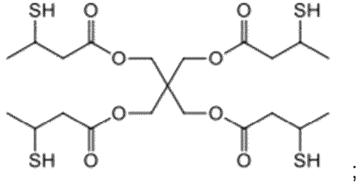
dipentaerythritol hexakis(2-mercaptopropionate) 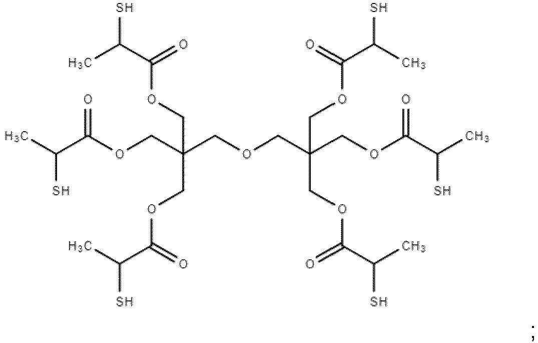 and
dipentaerythritol hexakis(3-mercaptobutylate)

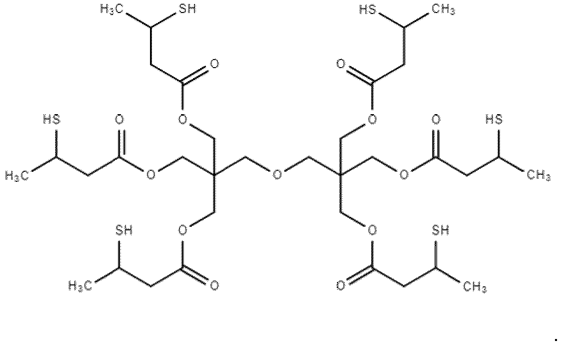

9. The adhesive formulation of any one of claims 1 to 8, wherein the thiol component is present in the adhesive formulation in an amount of 36 wt%, 37 wt%, 38 wt%, 39 wt%, 40 wt%, 41 wt%, 42 wt%, 43 wt%, 44 wt% or 45 wt%.

10. The adhesive formulation of any one of claims 1 to 9, wherein the borate component has the structure: 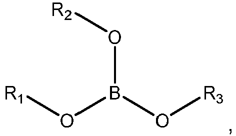 wherein R₁, R₂ and R₃ are each independently selected from the group consisting of: C₁₋₁₀ alkyl and C₁₋₉ alkyl silyl ether (including trialkyl silyl ethers);
optionally wherein the borate component is selected from the group consisting of: triethyl borate, tri-tertiary butyl borate and tris(trimethylsilyl) borate:

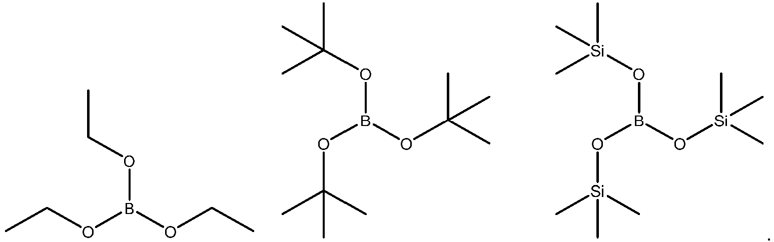

11. The adhesive formulation of any one of claims 1 to 10, wherein the borate component is present in the adhesive formulation in an amount of from about 0.15 to about 0.30 wt%.

12. The adhesive formulation of any one of claims 1 to 11, wherein the latent catalyst is an encapsulated imidazole component;
optionally wherein the latent catalyst is 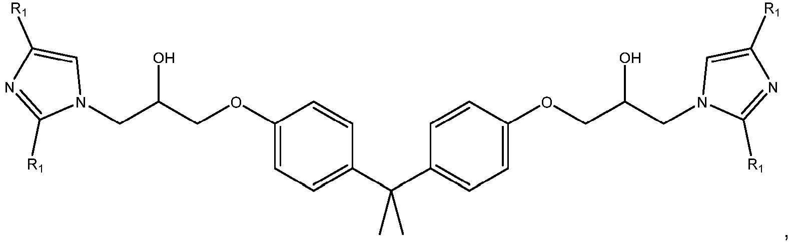 wherein each R₁ is independently H or Me.

13. The adhesive formulation of any one of claims 1 to 12, wherein the latent catalyst component is present in the formulation in an amount of from about 2 to 10 wt%.

14. The adhesive formulation of any one of claims 1 to 13, wherein the latent catalyst component is present in the formulation such that the following equation is satisfied: wt% of (E) / [wt% of (A) + wt% of (B)] x 100 > 4.5.

15. The adhesive formulation of any one of claims 1 to 14, wherein the latent catalyst has a melting point of less than 120°C;
optionally wherein the latent catalyst has a melting point of less than or equal to 110°C.

## Patentansprüche

1. Klebstoffformulierung, umfassend:
(A) eine Epoxidharzkomponente, die zwei oder mehr Epoxidgruppen pro Molekül aufweist;
(B) eine Epoxidkautschukkomponente, die zwei oder mehr Epoxidgruppen pro Molekül aufweist;
(C) von 36 bis etwa 45 Gew.-% einer Thiolkomponente, die zwei oder mehr unabhängig ausgewählte sekundäre oder tertiäre Thiolgruppen pro Molekül aufweist;
(D) 0,15 Gew.-% bis 0,45 Gew.-% einer Boratkomponente; und
(E) mehr als 0,05 Gew.-% bis weniger als 10 Gew.-% einer latenten Katalysatorkomponente, wobei die latente Katalysatorkomponente bei einer Temperatur von <120 °C aktiviert wird;
sodass die folgende Gleichung erfüllt ist: Gew.-% von (E) / [Gew.-% von (A) + Gew.-% von (B)] x 100 > 4.

2. Klebstoffformulierung nach Anspruch 1, wobei die Epoxidharzkomponente ein Polyglycidylether eines mehrwertigen Phenols ist;
wobei optional die Epoxidharzkomponente ein Polyglycidylether von Bisphenol A, Bisphenol F, Bisphenol AD, Brenzcatechin oder Resorcin ist.

3. Klebstoffformulierung nach Anspruch 1 oder Anspruch 2, wobei die Epoxidharzkomponente Diglycidylether-Bisphenol F (DGEBF): 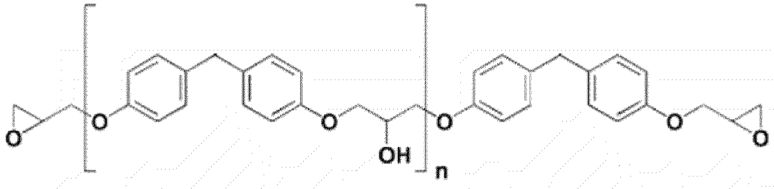 oder Diglycidylether-Bisphenol A (DGEBA): 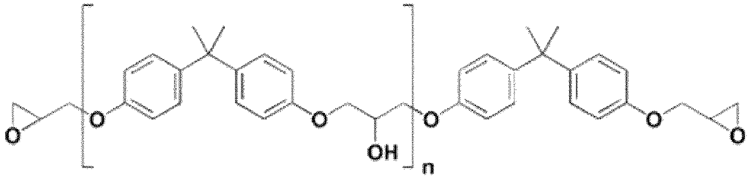 ist.

4. Klebstoffformulierung nach einem der Ansprüche 1 bis 3, wobei die Epoxidharzkomponente in der Klebstoffformulierung in einer Menge von etwa 15 bis etwa 35 Gew.-% vorhanden ist.

5. Klebstoffformulierung nach einem der Ansprüche 1 bis 4, wobei die Epoxidkautschukkomponente ein Addukt aus einer Epoxidkomponente und einer Kautschukkomponente ist, die einen Durchschnitt von zwei oder mehr Epoxidgruppen pro Molekül aufweist;
wobei optional die Epoxidkautschukkomponente ein epoxidterminiertes Addukt aus einem Epoxidharz und zumindest einer Kautschukkomponente ist, die epoxidreaktive Gruppen aufweist;
wobei ferner optional die Kautschukkomponente ein Dien/Nitril-Copolymer ist.

6. Klebstoffformulierung nach einem der Ansprüche 1 bis 5, wobei die Epoxidkautschukkomponente ein CTBN-Epoxidaddukt (BPA-Typ) ist: 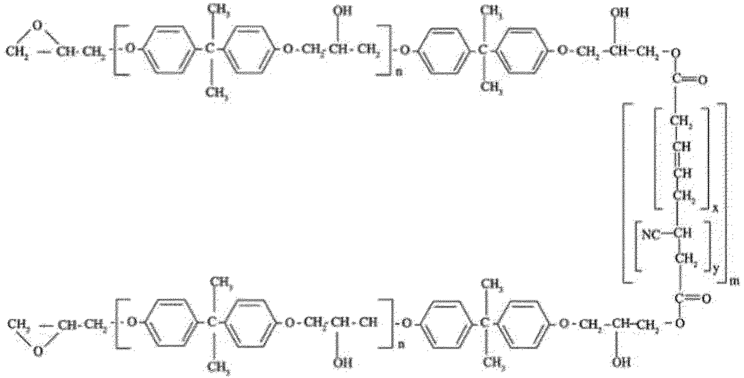 oder die Epoxidkautschukkomponente ein CTBN-Epoxidaddukt (BPF-Typ) ist:

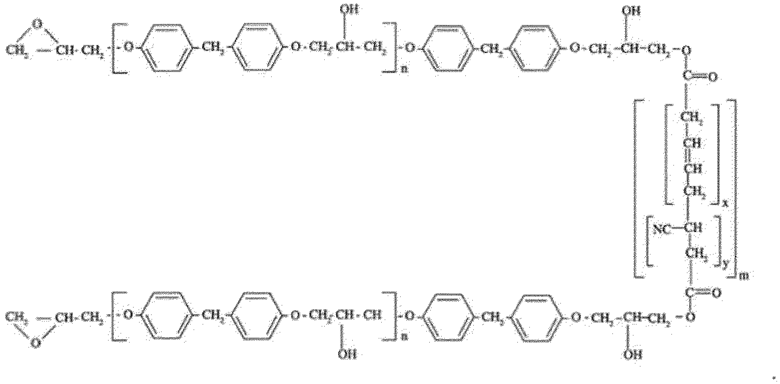

7. Klebstoffformulierung nach einem der Ansprüche 1 bis 6, wobei die Epoxidkautschukkomponente in der Klebstoffformulierung in einer Menge von etwa 7 bis etwa 26 Gew.-% vorhanden ist.

8. Klebstoffformulierung nach einem der Ansprüche 1 bis 7, wobei die Thiolkomponente einen Durchschnitt von zwei sekundären oder tertiären Thiolgruppen pro Molekül; einen Durchschnitt von drei sekundären oder tertiären Thiolgruppen pro Molekül; einen Durchschnitt von vier sekundären oder tertiären Thiolgruppen pro Molekül; einen Durchschnitt von fünf sekundären oder tertiären Thiolgruppen pro Molekül; oder einen Durchschnitt von sechs sekundären oder tertiären Thiolgruppen pro Molekül aufweist;
wobei optional die Thiolkomponente ausgewählt ist aus der Gruppe bestehend aus:
1,4-bis(3-Mercaptobutyroxy)butan (Karenz MT) 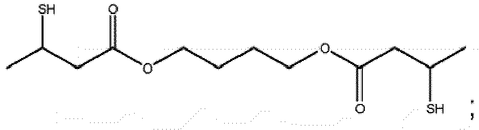
1-4-bis(3-Mercaptobutyloxy)butan 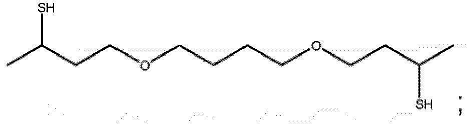
Trimethylolpropan-tris(3-mercaptobutylat) 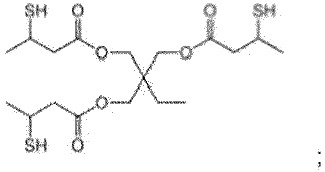
1,3,5-tris[2-(3-Mercaptobutanoyloxy)ethyl]-1,3,5-triazin-2,4,6-(1H,3H,5H)-trion 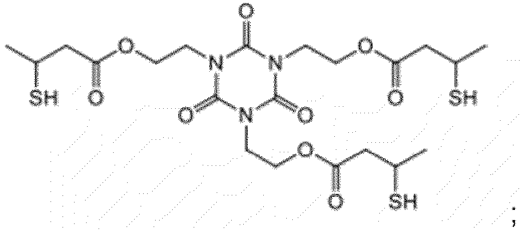
Pentaerythritol-tetrakis(3-mercaptobutylat) (Karenz MT PE1) 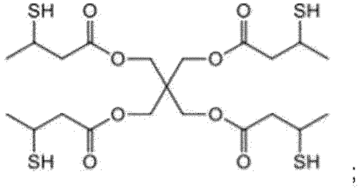
Dipentaerythritol-hexakis(2-mercaptopropionat) 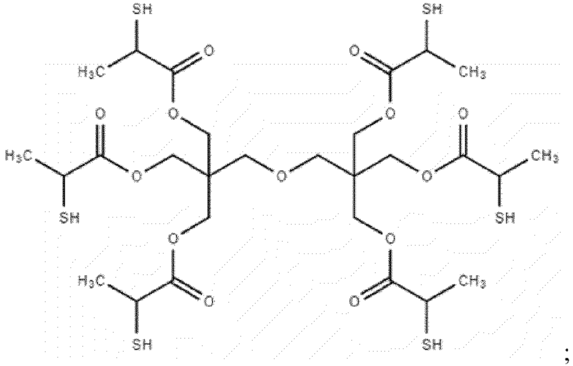 und
Dipentaerythritol-hexakis(3-mercaptobutylat)

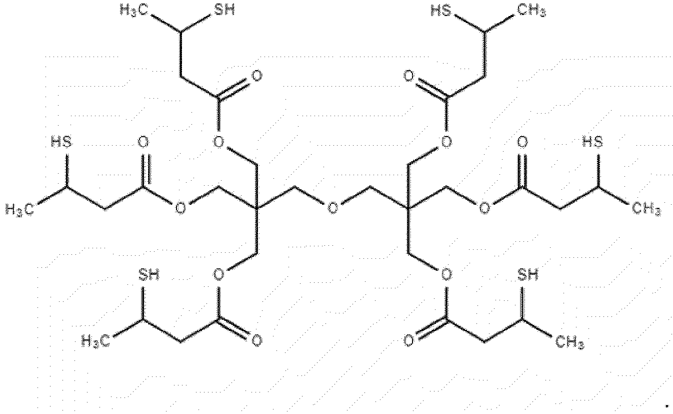

9. Klebstoffformulierung nach einem der Ansprüche 1 bis 8, wobei die Thiolkomponente in der Klebstoffformulierung in einer Menge von 36 Gew.-%, 37 Gew.-%, 38 Gew.-%, 39 Gew.-%, 40 Gew.-%, 41 Gew.-%, 42 Gew.-%, 43 Gew.-%, 44 Gew.-% oder 45 Gew.-% vorhanden ist.

10. Klebstoffformulierung nach einem der Ansprüche 1 bis 9, wobei die Boratkomponente die folgende Struktur aufweist: 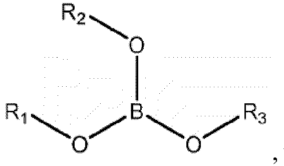 wobei R₁, R₂ und R₃ jeweils unabhängig ausgewählt sind aus der Gruppe bestehend aus: C₁₋₁₀-Alkyl und C₁₋₉-Alkylsilylether (beinhaltend Trialkylsilylether);
wobei optional die Boratkomponente ausgewählt ist aus der Gruppe bestehend aus: Triethylborat, tri-tertiärem Butylborat und tris(Trimethylsilyl)borat:

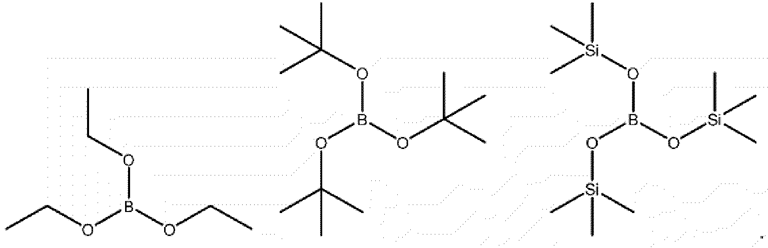

11. Klebstoffformulierung nach einem der Ansprüche 1 bis 10, wobei die Boratkomponente in der Klebstoffformulierung in einer Menge von etwa 0,15 bis etwa 0,30 Gew.-% vorhanden ist.

12. Klebstoffformulierung nach einem der Ansprüche 1 bis 11, wobei der latente Katalysator eine eingekapselte Imidazolkomponente ist;
wobei optional der latente Katalysator 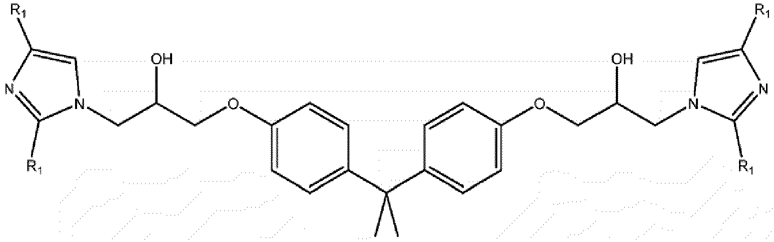 ist, wobei jedes R₁ unabhängig H oder Me ist.

13. Klebstoffformulierung nach einem der Ansprüche 1 bis 12, wobei die latente Katalysatorkomponente in der Formulierung in einer Menge von etwa 2 bis 10 Gew.-% vorhanden ist.

14. Klebstoffformulierung nach einem der Ansprüche 1 bis 13, wobei die latente Katalysatorkomponente in der Formulierung vorhanden ist, sodass die folgende Gleichung erfüllt ist: Gew.-% von (E) / [Gew.-% von (A) + Gew.-% von (B)] x 100 > 4,5.

15. Klebstoffformulierung nach einem der Ansprüche 1 bis 14, wobei der latente Katalysator einen Schmelzpunkt von weniger als 120 °C aufweist;
wobei optional der latente Katalysator einen Schmelzpunkt von weniger als oder gleich 110 °C aufweist.

## Revendications

1. Formulation adhésive comprenant :
(A) un composant de résine époxy comportant deux groupes époxyde ou plus par molécule ;
(B) un composant de caoutchouc époxy comportant deux groupes époxyde ou plus par molécule ;
(C) de 36 à environ 45 % en poids d'un composant thiol comportant deux groupes thiol secondaires ou tertiaires ou plus choisis indépendamment par molécule ;
(D) 0,15 % en poids à 0,45 % en poids d'un composant borate ; et
(E) plus de 0,05 % en poids à moins de 10 % en poids d'un composant catalyseur latent, dans laquelle le composant catalyseur latent est activé à une température <120 °C ;
de sorte que l'équation suivante soit satisfaite : % en poids de (E) / [% en poids de (A) + % en poids de (B)] x 100 > 4.

2. Formulation adhésive de la revendication 1, dans laquelle le composant de résine époxy est un éther polyglycidylique d'un phénol polyhydrique ;
dans laquelle, éventuellement, le composant de résine époxy est un éther polyglycidylique du bisphénol A, du bisphénol F, du bisphénol AD, du catéchol ou du résorcinol.

3. Formulation adhésive de la revendication 1 ou la revendication 2, dans laquelle le composant de résine époxy est un éther diglycidylique du bisphénol F (DGEBF) : 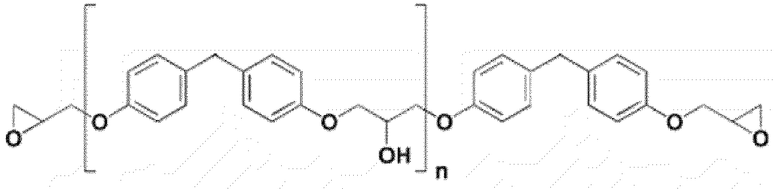 ou l'éther diglycidylique du bisphénol A (DGEBA) :

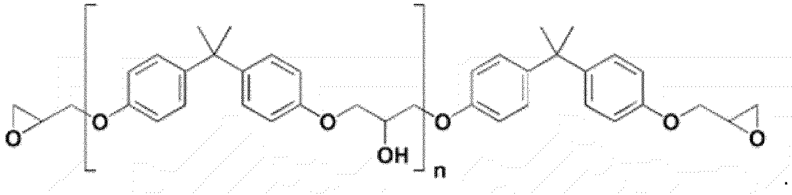

4. Formulation adhésive de l'une quelconque des revendications 1 à 3, dans laquelle le composant de résine époxy est présent dans la formulation adhésive en une quantité d'environ 15 à environ 35 % en poids.

5. Formulation adhésive de l'une quelconque des revendications 1 à 4, dans laquelle le composant de caoutchouc époxy est un adduit d'un composant époxyde et d'un composant de caoutchouc, qui comporte une moyenne de deux groupes époxyde ou plus par molécule ;
dans laquelle, éventuellement, le composant de caoutchouc époxy est un adduit à terminaison époxy d'une résine époxy et d'au moins un composant de caoutchouc qui comporte des groupes réactifs à l'époxyde ;
en outre dans laquelle, éventuellement, le composant de caoutchouc est un copolymère diène/nitrile.

6. Formulation adhésive de l'une quelconque des revendications 1 à 5, dans laquelle le composant de caoutchouc époxy est un adduit époxy de CTBN (type BPA) : 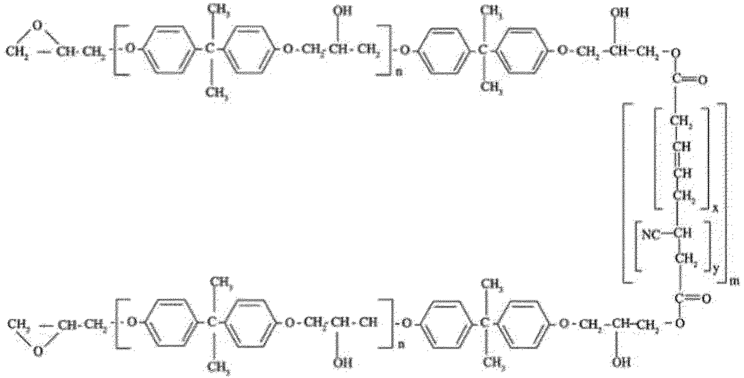 ou le composant de caoutchouc époxy est un adduit époxy de CTBN (type BPF) :

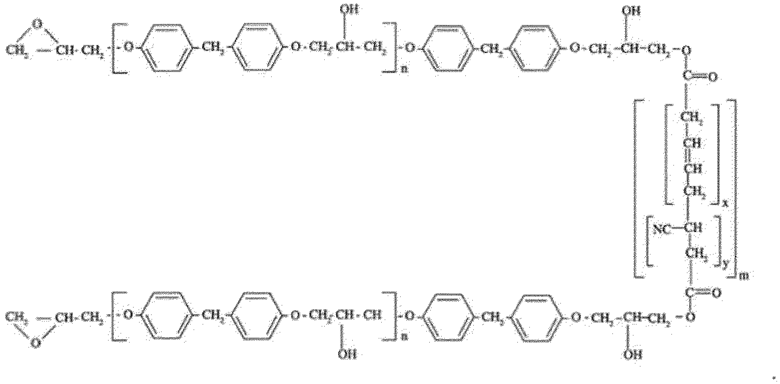

7. Formulation adhésive de l'une quelconque des revendications 1 à 6, dans laquelle le composant de caoutchouc époxy est présent dans la formulation adhésive en une quantité d'environ 7 à environ 26 % en poids.

8. Formulation adhésive de l'une quelconque des revendications 1 à 7, dans laquelle le composant thiol comporte une moyenne de deux groupes thiol secondaires ou tertiaires par molécule ; une moyenne de trois groupes thiol secondaires ou tertiaires par molécule ; une moyenne de quatre groupes thiol secondaires ou tertiaires par molécule ; une moyenne de cinq groupes thiol secondaires ou tertiaires par molécule ; ou une moyenne de six groupes thiol secondaires ou tertiaires par molécule ;
dans laquelle, éventuellement, le composant thiol est choisi dans le groupe constitué de :
1,4-bis(3-mercaptobutyroxy)butane (Karenz MT) 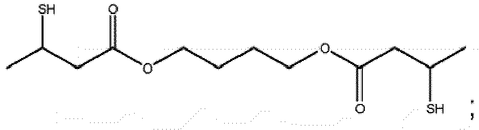
1-4-bis(3-mercaptobutyloxy)butane 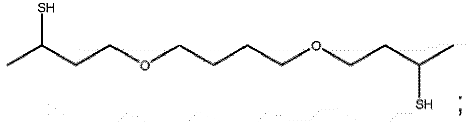
tris(3-mercaptobutylate) de triméthylolpropane 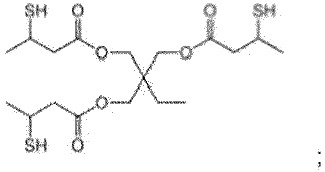
1,3,5-tris[2-(3-mercaptobutanoyloxy)éthyl]-1,3,5-triazine-2,4,6-(1H,3H,5H)-trione 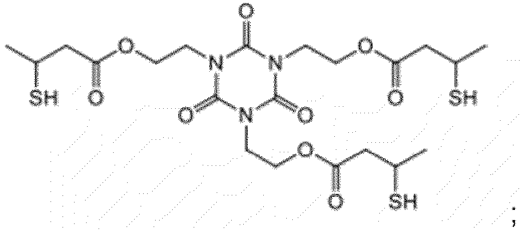
tétrakis(3-mercaptobutylate) de pentaérythritol (Karenz MT PE1) 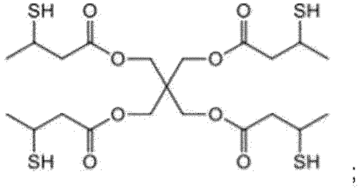
hexakis(2-mercaptopropionate) de dipentaérythritol 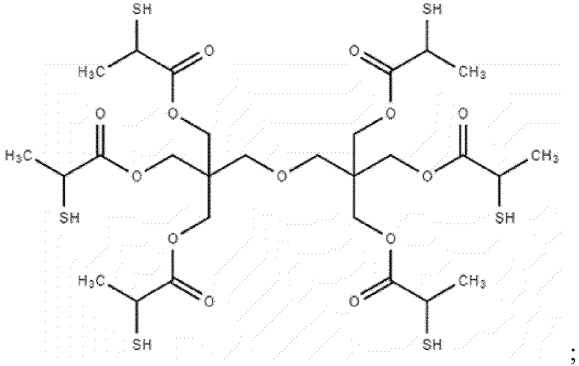 et
hexakis(3-mercaptobutylate) de dipentaérythritol

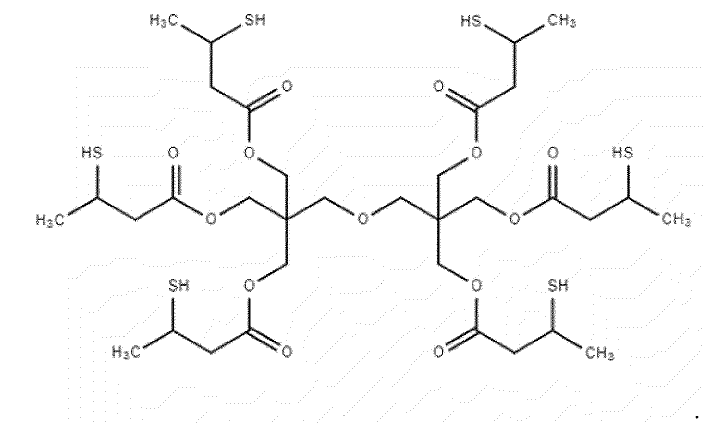

9. Formulation adhésive de l'une quelconque des revendications 1 à 8, dans laquelle le composant thiol est présent dans la formulation adhésive en une quantité de 36 % en poids, 37 % en poids, 38 % en poids, 39 % en poids, 40 % en poids, 41 % en poids, 42 % en poids, 43 % en poids, 44 % en poids ou 45 % en poids.

10. Formulation adhésive de l'une quelconque des revendications 1 à 9, dans laquelle le composant borate présente la structure : 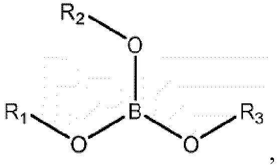 dans laquelle R₁, R₂ et R₃ sont chacun indépendamment choisis dans le groupe constitué : d'un alkyle en C₁₋₁₀ et d'un alkylsilyléther en C₁₋₉ (y compris les trialkylsilyléthers) ;
dans laquelle, éventuellement, le composant borate est choisi dans le groupe constitué : du borate de triéthyle, du borate de tri-butyle tertiaire et du borate de tris(triméthylsilyle) :

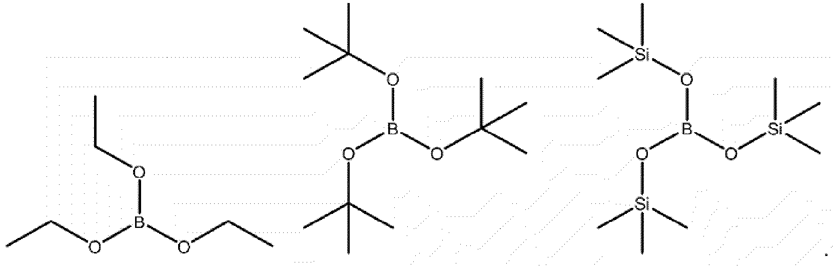

11. Formulation adhésive de l'une quelconque des revendications 1 à 10, dans laquelle le composant borate est présent dans la formulation adhésive en une quantité d'environ 0,15 à environ 0,30 % en poids.

12. Formulation adhésive de l'une quelconque des revendications 1 à 11, dans laquelle le catalyseur latent est un composant imidazole encapsulé ;
dans laquelle, éventuellement, le catalyseur latent est 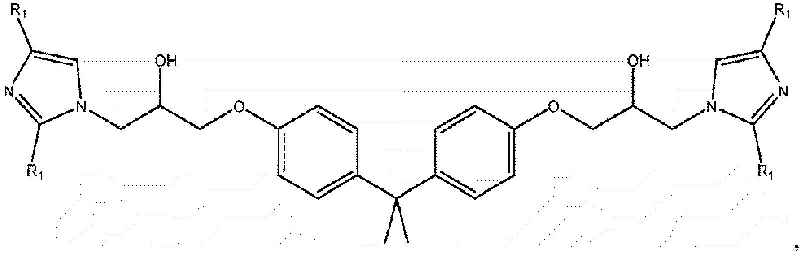 dans laquelle chaque R₁ est indépendamment H ou Me.

13. Formulation adhésive de l'une quelconque des revendications 1 à 12, dans laquelle le composant catalyseur latent est présent dans la formulation en une quantité d'environ 2 à 10 % en poids.

14. Formulation adhésive de l'une quelconque des revendications 1 à 13, dans laquelle le composant catalyseur latent est présent dans la formulation de sorte que l'équation suivante soit satisfaite : % en poids de (E) / [% en poids de (A) + % en poids de (B)] x 100 > 4,5.

15. Formulation adhésive de l'une quelconque des revendications 1 à 14, dans laquelle le catalyseur latent présente un point de fusion inférieur à 120 °C ;
dans laquelle, éventuellement, le catalyseur latent présente un point de fusion inférieur ou égal à 110 °C.
